# EUROPEAN PATENT SPECIFICATION

(11) **EP 2 742 983 B1**
(45) Date of publication and mention of the grant of the patent: **23.08.2017**
(21) Application number: 12196536.2
(22) Date of filing: 11.12.2012
(51) Int. Cl.: B01D 15/38

(54) **Method for isolating fragrance and flavour compounds**
Verfahren zum Isolieren von Duft- und Geschmackskomponenten
Procédé permettant d'isoler des composés d'arôme et de parfum

(43) Date of publication of application: 18.06.2014
(73) Proprietor: Symrise AG, 37603 Holzminden (DE)
(72) Inventor: Krammer, Gerhard, 37603 Holzminden (DE); Degenhardt, Andreas, 37603 Holzminden (DE); Walter, Johanna-Gabriela, 31582 Nienburg (DE); Scheper, Thomas, 30559 Hannover (DE); Stahl, Frank, 30419 Hannover (DE)
(74) Representative: Fabry, Bernd

(56) References cited:
- WO-A1-2012/172546
- BHATNAGAR R ET AL: "SEPARATION OF NONTARGET COMPOUNDS BY DNA APTAMERS", ANALYTICAL CHEMISTRY, AMERICAN CHEMICAL SOCIETY, US, vol. 72, no. 4, 15 February 2000 (2000-02-15), pages 827-831, XP000924024, ISSN: 0003-2700, DOI: 10.1021/AC991112F
- RAVELET C ET AL: "Liquid chromatography, electrochromatography and capillary electrophoresis applications of DNA and RNA aptamers", JOURNAL OF CHROMATOGRAPHY, ELSEVIER SCIENCE PUBLISHERS B.V, NL, vol. 1117, no. 1, 2 June 2006 (2006-06-02) , pages 1-10, XP024967352, ISSN: 0021-9673, DOI: 10.1016/J.CHROMA.2006.03.101 [retrieved on 2006-06-02]
- JOHANNA-GABRIELA WALTER ET AL: "Aptamers as affinity ligands for downstream processing", ENGINEERING IN LIFE SCIENCES, vol. 12, no. 5, 25 June 2012 (2012-06-25), pages 496-506, XP055058513, ISSN: 1618-0240, DOI: 10.1002/elsc.201100197
- ERIC PEYRIN: "Nucleic acid aptamer molecular recognition principles and application in liquid chromatography and capillary electrophoresis", JOURNAL OF SEPARATION SCIENCE, vol. 32, no. 10, 15 April 2009 (2009-04-15), pages 1531-1536, XP055058515, ISSN: 1615-9306, DOI: 10.1002/jssc.200900061

## Description

The present invention relates to a method for isolating target flavor compounds or fragrance compounds on a preparative scale using specific aptamers immobilized on a support (as described herein below).

Flavor and fragrance compounds continue to be of significant commercial relevance. Especially cosmetics and food industries are on a constant search for suitable substances and efficient methods to isolate or produce them. Extraction from natural sources as well as synthetic or semi-synthetic access to compounds normally requires a selective isolation of the target molecule from complex mixtures such as extracts or reaction mixtures. Typical purification methods known in the prior art include solid phase extraction using polymers, liquid/liquid partitioning by solubility, membrane separation by size exclusion or pervaporation.

Isolation methods which are based on intermolecular recognition developed by an evolutionary selection process such as antigen/antibody interactions are also believed to be efficient in terms of specificity and therefore well suited for analytical purposes. Their large(r)-scale applicability, however, often suffers from a loss in performance and/or the limited availability of specific capture agents. This is especially true for antibodies, which are produced in cell culture and therefore require large expenses of time and cost for the purification from the fermentation broth and are prone to large batch-to-batch variations. Moreover, antibodies are generated by immunization which is not applicable for all target compounds (e.g. toxic or non-immunogenic substances), and their efficient use is restricted to conditions close to the physiological range as they are highly susceptible to changes in pH and temperature.

Thus, there is still a need for an optimized process for selectively isolating relevant target molecules such as flavor or fragrance compounds from complex mixtures, preferably in a preparative scale.

The present invention now provides a novel, particularly advantageous method for isolating, preferably in preparative scale, one or more target compounds, wherein the or, respectively, one, more or all of the target compounds are selected from the group consisting of flavor compounds and fragrance compounds, in particular compounds having one, more or all of the taste impressions sweet, umami, warming and tingling, and compounds having a bitter and/or an astringent taste impression, and compounds with (flavor and/or fragrance) modifying properties,
comprising the following steps:
(i) providing a composition consisting of the target compound(s) to be isolated and one or more further compounds,
(ii) providing one or more aptamers having specific binding capability towards the target compound to be isolated or, respectively, towards one, more or all of the target compounds to be isolated,
   wherein the aptamer(s) is/are immobilized, preferably covalently immobilized, on a support, the support being preferably selected from the group consisting of magnetic particles, organic polymers, inorganic polymers, bio-polymers, membrane adsorbers and monolithic materials,
(iii) mixing the aptamer(s) with the composition consisting of the target compound(s) to be isolated and one or more further compounds, and specifically binding the compound(s) to be isolated to the aptamer(s),
(iv) optionally, removing one, more or all compounds of the composition which are not specifically bound to the aptamer(s) and/or removing (other) impurities, and
(v) releasing the bound target compound(s) from the aptamer(s).

Specific molecular recognition by nucleic acid motifs has gained a wide therapeutic and analytic scope. Aptamer sequences are used as biosensors, for example on biosensor arrays for the detection of various analytes and the removal of contaminants (e.g. bisphenol A, food borne pathogens such as Campylobacter, Listeria, Escherichia, Staphylococcus or Clostridium). The use of nucleic acid aptamers has several distinct advantages over the introductory mentioned antigen/antibody systems which mainly arise from their preparation by a combinatorial chemistry approach. In-vitro methods like SELEX (systematic evolution of ligands by exponential enrichment, Ellington and Szostak, Nature, 1990, 346, 818-822; Robertson and Joyce, Nature, 1990, 344, 467-468; Tuerk and Gold, Science, 1990, 249, 505-510) or Monolex (Nitsche et al., BMC Biotechnol., 2007, 7, 48) are not restricted by biological/physiological limitations, which means that aptamers can advantageously be selected against virtually any kind of target ligands and for use under virtually any desired conditions (e.g. regarding pH or temperature). Oligonucleotide libraries are produced synthetically and the sequence(s) with the highest affinity to the target compound is/are identified in an iterative process under increasingly stringent binding conditions. Furthermore, aptamers are very stable against pH and temperature extremes and can be regenerated without loss of binding activity.

Various therapeutic and analytic methods have been developed in the prior art, which are based on the specific ligand recognition by aptamer sequences.

For example, in a review in Applied Microbiology and Biotechnology, 2005, 69, 367-374, Proske et al. summarize recent developments in aptamer technology and validate their suitability as, for example, diagnostic tools.

Tombelli et al. describe in Proceedings of SPIE - The International Society for Optical Engineering, 2007, 6585, analytical applications of aptamers and their potential as tools for diagnostics and in environmental and food analysis.

The use of aptamers in liquid chromatography, capillary electrophoresis and electrochromatography is for example discussed by Ravelet et al. in J Chromatogr A, 2006, 1117, 1-10.

A method for microaffinity purification of proteins using photo-cleavable RNA aptamers on affinity beads was proposed by Chung et al. in Electrophoresis, 2005, 26, 694-702, and found useful to identify target proteins from a protein mixture for a potential use on a diagnosis microchip.

Kökpinar and coworkers developed a method to purify His-tagged proteins using aptamers directed against the His-tag, which were immobilized on magnetic beads, and investigated the regeneration and reuse of the aptamer-modified beads (Biotechnology and Bioengineering, 2011, 108, 2371-2379*).*

Zhao et al. report the use of aptamer-modified monolithic capillaries for protein separation and detection in Anal Chem, 2008, 80, 3915-3920.

Connor and McGown studied protein capture by aptamer stationary phases in affinity capillary chromatography on the basis of a thrombin-binding DNA aptamer/thrombin model system and quantified the results with respect to a non-aptamer-modified capillary (J Chromatogr A, 2006, 1111, 115-119).

Studies mentioned so far were mainly directed towards protein binding aptamers.

A study on the use of aptamer stationary phases in capillary chromatography was conducted by Deng et al. using a biotinylated DNA aptamer that binds adenosine immobilized by reaction with streptavidin on chromatographic supports (Anal Chem, 2001, 73, 5415-5421).

The state of the art of aptamer-based purification has been reviewed by Walter et al. in Engineering in Life Sciences, 2012, DOI: 10.1002/elsc.201100197.

Aptamer selection against complex targets such as cell membranes has also been demonstrated. An approach to detect cancer cells using an aptamer-nanoparticle strip biosensor is described by Liu et al. in Anal Chem, 2009, 81, 10013-10018. The biotinylated aptamers selected against cancer cells are immobilized on gold nanoparticles via streptavidin and the resulting biosensor is capable to capture cells to an amount that is, under optimal conditions, visually detectable.

US 2010/0151465 relates to a method for selective capture and release of analytes and, inter alia, describes the use of aptamers. However, US 2010/0151465 does not disclose or suggest a method for isolating flavor and fragrance compounds (as described herein). In addition, US 2010/0151465 does not describe methods for isolating compounds in a preparative scale (as described herein). Bhatnagar & al. ("Separation of nontarget compounds by DNA aptamers"; Anal. Chem., Vol.72(4), 827-831) also disclose the separation of small molecules, namely amino-acids enantiomers and polycyclic aromatic hydrocarbons, using aptamers attached on a capillary.

The cited prior art demonstrates the high versatility of aptamer technology in biochemical methods. However, the above listed applications have been designed and optimized for small-scale use (only), which is automatically implied in analytical, diagnostic and therapeutic uses.

The inventors now found out that besides diagnostic and therapeutic analytes and agents, aptamers can also be selected against and used with regard to other economically relevant compounds, in particular flavor and fragrance molecules (as described herein). Selective isolation of such compounds using aptamer recognition has not been attempted on a preparative or industrial scale so far. The fact that flavor and fragrance compounds are small molecules with less than 300 Da together with high volatility makes their isolation a difficult task. It is surprising that the preparative scale isolation of flavor and fragrance compounds is feasible using aptamers, because aptamers are mostly designed for larger and more polar molecules, due to the fact that nucleic acids are polar. A general rule in isolation and separation of molecules is that media and molecules of the same polarity range are suitable for successful interaction and therefore potential isolation out of complex mixtures. Moreover, it is known that small molecules are bound deeply inside a binding pocket of the aptamer, which is in contrast to the binding between aptamers and proteins, which takes place via large portions of the surfaces of aptamer and protein. As flavor and fragrance compounds belong to the class of small molecules which are believed to be bound deep in the aptamer fold, it was not expected that the bound target could be eluted without impairing the aptamer itself.

In the context of the present invention "isolating" refers to any one or a combination of procedures or, respectively, procedural steps to remove one or more substance(s) from a mixture. Isolation may encompass separation, purification, enrichment and concentration or combinations thereof. The meaning of the term "isolating" in connection with a method according to the present invention will become more apparent when studying the following description, the examples and, in particular, the attached claims.

An isolation on "preparative scale" according to the present invention is a quantitative process and preferably means that a total amount of 50 wt.% or more, preferably 60 wt.% or more, more preferably 70 wt.% or more, in particular 80 or even 90 wt% or more, ideally up to 100 wt.% of the target compound present in the provided composition, or, respectively, mixture is isolated. The inventive concept is especially to be distinguished from an analytical isolation or mere detection of (target) compounds. The scale used in connection with the present invention can range from laboratory to industrial scale, wherein the term "scale" can refer to either the amount of target compound or the amount of composition containing the same.

"Aptamers" in the context of the present invention are any nucleic acid sequences or modified nucleic acid sequences, which have been selected to bind to one or more molecule(s) preferentially or specifically. The aptamers can be selected under more or less stringent conditions, which either ensure a specific binding to a defined compound or allow the (group-specific) binding of structurally related molecules, respectively. It is also possible that one (group-specific) aptamer can bind two or more structurally related molecules. Variation of the selection conditions such as pH and temperature can be used to adjust specificity or affinity towards the target molecule(s).

In the context of the present invention "specific binding" preferably means that only one defined molecule is bound by the aptamer, but the aptamers used in the present invention are not restricted to absolute specificity as they can also be selected under less stringent conditions to bind a range of structurally related compounds.

"Not specifically bound" compounds are, in the context of the present invention, preferably compounds which the aptamer(s) has/have not been selected against. Non specific binding can be caused by non-selective interactions between an aptamer and a compound, e.g. via electrostatic interactions. Moreover, non-specific binding can occur between compounds and/or the target molecule and functional groups of the carrier material. Again, a desired range of specificity can, for example, be adjusted by varying the stringency of the selection conditions.

The term "covalent" refers to the formation of a chemical bond, in which electrons are shared between the atoms forming the bond. In the context of the present invention "covalent bonding" is especially to be distinguished from molecular recognition which results in high or low affinity binding between two molecules and furthermore from any kind of electrostatic, hydrophobic/hydrophilic attractions.

A "support" in the context of the present invention is preferably provided in form of beads, gels, membranes or monolithic materials or materials containing the same, but can also be amorphous.

"Magnetic beads", in the context of the present invention, are particles consisting of or comprising a magnetic material being unmodified or modified, being optionally provided with a coating and/or being optionally chemically functionalized.

"Bio-polymers", in the context of the present invention, are preferably polysaccharides but include all polymers comprising amino acid, nucleotide and/or sugar functions as well as derivatives and mixtures thereof.

The term "membrane adsorber(s)", in the context of the present invention, refers to membrane materials that can be provided in any shape but preferably have a large surface area, including but not limited to cellulose, hydrophilic polyether sulfones, nylon, polyether, polyurethane, polyurea, polyether sulfones, polysulfones, polyvinylidene difluoride, poly GMA-EDMA (glycidyl methacrylate-co-ethylene dimethacrylate) and modifications thereof, which can be e.g. aldehyde, epoxy, carboxy or amino functionalizations.

"Monolithic materials", in the context of the present invention, are preferably any rigid macro-porous polymeric materials.

In the context of the present invention "mixing" can refer to any kind of contacting between two materials.

The present invention relates to a quantitative method by which one or more target compounds can be isolated from a complex mixture. Accordingly, a maximum enrichment or, respectively, a complete removal of the target compound(s) can be accomplished by the method according to the present invention.

Furthermore, the method according to the invention is applicable for a scale ranging from laboratory scale to industrial scale. Thus, it is possible to purify large amounts of one or more target compound(s) as well as to completely remove contaminations of one or more target compound(s) from large amounts of a composition.

The method according to the present invention is optimized to isolate flavor and fragrance compounds from natural sources or reaction mixtures. In view of the above mentioned economic relevance of such compounds, the isolation on preparative scale advantageously facilitates production with a minimum loss of substance during the purification as well as a minimum amount of contamination in the product. In particular, compounds having one, more or all of the taste impressions sweet, umami, warming, tingling or (flavor and/or fragrance) modifying properties are of significant value for the food industry and are preferably purified in large amounts using the method according to the present invention. Compounds that have a bitter and/or astringent taste impression may either be enriched as beneficial components of a composition or can completely and selectively be removed as undesired from a composition. Further preferred target compounds are described herein below.

The one or more target compounds are provided in a composition consisting of the target compound(s) to be isolated and one or more further compounds (see step (i) of the method according to the invention).

According to step (ii) of the invention, one kind of or more kinds of aptamers are provided to capture the target compound(s), entailing the advantages described above. Aptamers can be selected against a variable range of compounds and under variable binding conditions such as pH and temperature, resulting in a specificity that can be accurately controlled and optimized for a given application. By using highly specific aptamers under stringent conditions, it is possible to obtain ultra pure products. Furthermore, even two or more structurally not related compounds can be isolated in parallel by applying the corresponding specific aptamers together in one process.

In the method according to the invention, the aptamer(s) is/are preferably covalently immobilized on a support. A covalent bond between aptamer and support ensures high stability of the capture agent and is not readily susceptible to changes in pH and temperature, which can be problematic when relying on electrostatic and/or hydrophilic/hydrophobic interactions or molecular recognition. Efficient capture and elution of the target molecule is therefore not restricted to certain conditions. Moreover, large modifications such as biotinylation and subsequent binding to streptavidin, which can significantly influence aptamer folding and/or specificity, are not necessary.

A number of modifications on aptamer and/or support may be used in order to covalently link both, in particular by using coupling agents. Simple amino modifications of the aptamer facilitate for example the coupling to carboxy functions on the support using carbodiimides as coupling agents such as 1-ethyl-3-(3-dimethyl aminopropyl) carbodiimide hydrochloride (EDC) or dicyclohexyl carbodiimide (DCC). Amino modifications can also be used to attach the aptamer to hydroxyl functions on the support by reaction with carbonyl diimidazole (CD), 2-flouro-1-methyl pyridinium toluene-4-sulphonate (FMP) or cyanogen bromide (CNBr). Using N-hydroxysuccinimide (NHS) esters such as disuccinimidyl glutarate (DSG), disuccinimidyl suberate (DSS) or bis(sulfosuccinimidyl) suberate (sulfo-DSS), or imido esters such as dimethyl adipimidate (DMA), dimethyl pimelimidate (DMP) or dimethyl suberimidate (DMS), or alternatively, 1,5-difluoro-2,4-dinitrobenzene (DFDNB), cyanuric chloride or 1,4-phenylene diisothiocyanate (PCD), amino modified aptamers can also be bound to amino functions on the support. Moreover, the aptamer(s) can be modified with a sulfhydryl group with allows coupling to hydroxyl functions on the support using p-maleimidophenyl isocyanate (PMPI) or coupling to amino functions on the support using succinimidyl trans-4-(maleimidylmethyl)cyclohexane-1-carboxylate (SMCC).

A large variety of support materials can be applied in a method according to the invention. Preferably the support material is selected from a group consisting of magnetic particles, organic polymers, inorganic polymers, bio-polymers, membrane adsorbers and monolithic materials. Preferred materials and advantages of the different support materials will be discussed below. A person skilled in the art will be able to decide which materials to use advantageously in a given application of the method according to the invention.

According to the present invention the aptamer(s) is/are mixed with the composition consisting of the target compound(s) to be isolated and one or more further compounds in step (iii) and specifically bind(s) to the compound(s) to be isolated. In a preferred embodiment, the aptamer-modified support material is filled into a column as solid phase in which it can be equilibrated in buffer or washed before and/or after binding of the target molecule(s). Furthermore, the optimal binding conditions can easily be adjusted in such an arrangement.

Removal of one, more or all compounds which are not specifically bound to the aptamer(s) and/or other impurities is optionally performed in step (iv) and can involve one or more washing steps ensuring purity of the product as required for a certain application.

Finally, the bound target compound(s) is/are released from the aptamer(s) in step (v), preferably completely and, in a preferred embodiment, by elution from the column to obtain the pure target compound(s).

In a preferred embodiment of the present invention, step (iii) comprises incubating the resulting mixture, which is obtained by mixing the aptamer(s) or, respectively, the aptamer-modified support material with the composition consisting of the target compound(s) to be isolated and one or more further compounds, under conditions allowing the target compound(s) to specifically bind to the aptamer(s).

The incubation can be performed by simply leaving the mixture for a certain amount of time but can also involve stirring or shaking. Preferably, conditions such as pH or temperature, which influence the stringency of the binding process, are optimized. The conditions which allow the target compound(s) to specifically bind to the aptamer(s) are advantageously already determined during the selection of aptamer(s) and adjusted accordingly. In a preferred embodiment, the incubation can be performed directly in the column but it can also be performed prior to packing of the column.

In a further preferred embodiment, the conditions in step (iii) are such that a correct folding of the aptamer(s) is obtained or, respectively, maintained.

Aptamer folding plays an essential role in the context of the present invention. A correctly folded aptamer forms the structural motif(s) which are responsible for specific binding of the target compound. A correct fold of the aptamer(s) guarantees efficient and specific binding, while an incorrect fold or a partly or completely unfolded state can potentially not bind the target compound(s) at all or with more or less significant loss of affinity; or it can exclusively or additionally bind non-target compounds. The correct folding of an aptamer depends on the conditions applied during the selection of the aptamer such as buffer composition, pH and temperature as well as ionic strength and concentration. Incubation of the aptamer in the buffer the aptamer was selected in allows the aptamer(s) to (re-)fold into its correct structure or, respectively, maintain its correct structure.

Another preferred embodiment of the method according to the invention comprises the following step:
(vi) isolating the target compound(s) released in step (v).

Step (vi) is added to separate the target compound from the aptamer(s) and the support in order to obtain it in pure solution. Depending on the support material this step can, for example, be performed by using a magnet, by filtration, centrifugation, or by flushing the column or membrane with an appropriate eluting system.

A further preferred embodiment of the method according to the invention additionally comprises the following step:
(vii) regenerating the immobilized aptamer(s), so as to the aptamer(s) can be re-used in a subsequent isolation process.

Regeneration of the immobilized aptamer(s) in the context of the present invention refers to a process by which, after a complete removal of the target compound, the aptamer is subjected to the conditions, which induce it to adopt its correct fold (again) so that it is able to bind new target compound(s). Preferably, the aptamer refolds to its correct fold when incubated in the selection buffer. The regeneration allows to re-use the capture agent in an isolation process in which more compound(s) need(s) to be isolated than the amount of aptamer available can bind in one run or in any following isolation process. This aspect of the present invention is especially advantageous when the isolation is performed on a large scale, where the cost of production of capturing agent becomes prohibitive or where a target compounds needs to be quantitatively removed from a composition.

In another preferred embodiment of the invention, step (v) comprises
- setting the temperature of the mixture resulting in step (iv) such that the specifically bound target compound(s) is/are released from the aptamer(s),
   and/or
- adjusting the pH of the mixture resulting in step (iv) such that the specifically bound target compound(s) is/are released from the aptamer(s),
   and/or
- using one or more chemical substances, preferably a chelating agent like EDTA, for releasing the bound target compound(s) from the aptamer(s),
   preferably wherein step (v) comprises
- adjusting the pH of the mixture resulting in step (iv) such that the specifically bound target compound(s) is/are released from the aptamers(s),
   and/or
- using one or more chemical substances, preferably EDTA, for releasing the bound target compound(s) from the aptamer(s).

A number of treatments are available to release the bound target compound(s) from the aptamer(s). They include, for example, exposing the target compound/aptamer complex(es) to conditions where the binding affinity of the target compound(s) to the aptamer(s) is significantly reduced, exposing the target compound/aptamer complex(es) to conditions that trigger unfolding or refolding of the aptamer(s) so that it is/are no longer able to bind the target compound(s) or they can be as harsh as to irreversibly destroy the aptamer(s) to release the target compound(s).

Setting the temperature such that the specifically bound target compound(s) is/are released from the aptamer(s) advantageously avoids the addition of further reagents. Preferably, a moderate temperature increase results in a reversible unfolding of the aptamer(s), which releases the target compound(s) but does not damage the aptamer(s). The unfolded aptamer(s) can then be regenerated by lowering the temperature to allow refolding.

A change in pH can also trigger unfolding or it can e.g. by protonation or deprotonation of certain positions alter the interaction at the binding site between the target compound(s) and the aptamer(s) resulting in a release of the target compound(s). An advantage of the pH change release is that it is also easily reversible and, within fairly broad limits, does not destroy the aptamer(s) but allows regeneration of the capture agent.

Alternatively, one or more chemical substances are added to release the target compound(s) from the aptamer(s).

The dependency of many aptamers' three-dimensional folding structure on divalent ions (e.g. Mg²⁺, Ca²⁺) facilitates rather mild elution conditions utilizing chelating agents. Therefore, the presence of these divalent ions is a further parameter which can trigger unfolding or refolding of the aptamer. For example, EDTA acts as a chelator of divalent ions and thus destabilizes the three-dimensional structure of the aptamer. Addition of EDTA to the mixture resulting in step (iv) is a mild form of release and the agent can also easily be removed from the solution after release.

In a preferred embodiment, step (v) comprises
- setting the temperature and adjusting the pH of the mixture resulting in step (iv) such that the specifically bound target compound(s) is/are released from the aptamer(s).

Combination of the two release methods allows to fine-tune the release conditions, which can otherwise result in a conflict between a complete release and not destroying either the target compound(s) or the aptamer(s).

In a further preferred embodiment of the method according to the invention, the support, on which the aptamer(s) is/are immobilized, is selected from the group consisting of
organic polymers, preferably selected from the group consisting of polystyrenes, methacrylates and acrylamides,
inorganic polymers, preferably selected from the group consisting of silica and glass,
bio-polymers, preferably selected from the group consisting of dextran, sepharose and cellulose,
membrane adsorbers, preferably of membrane adsorbers comprising or consisting of one or more materials being selected from the group consisting of cellulose, polyethersulfone and nylon (for further examples see above), and
monolithic materials, preferably of monolithic materials comprising or consisting of one or more materials being selected from the group consisting of polymethacrylates, polystyrenes, polyacrylamides and silica.

Alternatively, magnetic beads may be used in connection with the present invention (as described above). The use of magnetic beads as support has several advantages. They are commercially available with different coatings and a variety of affinity ligands as well as functional groups, which allow a covalent modification according to the present invention. Magnetic beads can be manipulated using permanent magnets or electromagnets independent of the modifications and interactions on their surface. Therefore, they can be collected and isolated from mixtures without destroying the aptamer/target compound complex.

Organic, inorganic and bio-polymers are well known in the prior art for their advantageous use in purification, especially in chromatographic methods. To a person skilled in the art, many materials with different properties and functionalities are available as well as methods and reagents to (further) modify them according to a prospective application in the method according to the invention.

Membrane adsorbers, which may be used as support in the method according to the invention, are preferably folded in a way to expose a maximum surface area. Convective transport of compounds in the mixture is enhanced between the boundary surfaces, facilitating a fast distribution of target compound(s) on the support. The high flow rates in membrane adsorbers allow to increase the performance compared to other sorbents significantly because the dynamic binding capacity is independent of the flow rate. Preferred membrane materials which were already discussed above can be modified with e.g. aldehyde, epoxy, carboxy or amino functions to enable a covalent immobilization of the aptamer according to the invention.

Monolithic materials are provided in a large variety of sizes and shapes, ranging from, sheets and layers to tubes and cylinders as well sponges. As macro-porous materials they exhibit a large surface area and thus a high binding capacity. Like membranes, they exhibit convective transport and enable high flow rates. Due to their rigid structure they are more stable than membranes. Their surface can be modified with functional groups to allow covalent immobilization of the aptamer(s).

In a preferred embodiment of the present invention, the or, respectively, one, more or all of the target compound(s) are selected from the group consisting of
- aroma compounds, in particular acetophenone, allyl capronate, alpha-ionone, beta-ionone, anisaldehyde, anisyl acetate, anisyl formate, benzaldehyde, benzothiazole, benzyl acetate, benzyl alcohol, benzyl benzoate, butyl butyrate, butyl capronate, butylidenephthalide, carvone, camphene, caryophyllene, cineole, cinnamyl acetate, citrale, citronellol, citronellal, citronellyl acetate, cyclohexyl acetate, cymene, damascone, decalactone, dihydrocumarine, dimethyl anthranilate, dodecalactone, ethoxyethyl acetate, ethyl butyric acid, ethyl butyrate, ethyl caprinate, ethyl capronate, ethyl crotonate, ethyl furaneol, ethyl guaiacol, ethyl isobutyrate, ethyl isovalerate, ethyl lactate, ethylmethyl butyrate, ethyl propionate, eucalyptol, eugenol, ethyl heptylate, 4-(p-hydroxyphenyl)-2-butanone, gamma-decalactone, geraniol, geranyl acetate, grapefruit aldehyde, methyl dihydrojasmonate (e.g. Hedion®), heliotropin, 2-heptanone, 3-heptanone, 4-heptanone, trans-2-heptenal, cis-4-heptenal, trans-2-hexenal, cis-3-hexenol, trans-2-hexenoic acid, trans-3-hexenoic acid, cis-2-hexenyl acetate, cis-3-hexenyl acetate, cis-3-hexenyl capronate, trans-2-hexenyl capronate, cis-3-hexenyl formate, cis-2-hexyl acetate, cis-3-hexyl acetate, trans-2-hexyl acetate, cis-3-hexyl formate, para-hydroxybenzyl acetone, isoamyl alcohol, isoamyl isovalerate, isobutyl butyrate, isobutyraldehyde, isoeugenol methyl ether, isopropylmethyl thiazole, lauric acid, levulinic acid, linalool, linalool oxide, linalyl acetate, menthol, menthofuran, methyl anthranilate, methyl butanol, methyl butyric acid, 2-methylbutyl acetate, methyl capronate, methyl cinnamate, 5-methyl furfural, 3,2,2-methyl cyclopentenolone, 6,5,2-methyl heptenone, methyl dihydrojasmonate, methyl jasmonate, 2-methylmethyl butyrate, 2-methyl-2-pentenoic acid, methyl thio butyrate, 3,1-methyl thiohexanol, 3-methyl thiohexyl acetate, nerol, neryl acetate, trans,trans-2,4-nonadienal, 2,4-nonadienol, 2,6-nonadienol, nootkatone, delta-octalactone, gamma-octalactone, 2-octanol, 3-octanol, 1,3-octenol, 1-octyl acetate, 3-octyl acetate, palmitic acid, paraldehyde, phellandrene, pentanedione, phenylethyl acetate, phenylethyl alcohol, phenylethyl alcohol, phenylethyl isovalerate, piperonal, propionaldehyde, propyl butyrate, pulegone, pulegol, sinensal, sulfurol, terpinene, terpineol, terpinolene, 8,3-thiomenthanone, 4,4,2-thiomethyl pentanone, thymol, delta-undecalactone, gamma-undecalactone, valencene, valeric acid, vanillin, acetoin, ethyl vanillin, ethylvanillin isobutyrate (= 3-ethoxy-4-isobutyryl oxybenzaldehyde), 2,5-dimethyl-4-hydroxy-3(2H)-furanone and its derivates (preferably homofuraneol (= 2-ethyl-4-hydroxy-5-methyl-3(2H)-furanone), homofuronol (= 2-ethyl-5-methyl-4-hydroxy-3(2H)-furanone and 5-ethyl-2-methyl-4-hydroxy-3(2H)-furanone), maltol and maltol derivates (preferably ethyl maltol), cumarine, gamma-lactones (preferably gamma-undecalactone, gamma-nonalactone, gamma-decalactone), delta-lactones (preferably 4-methyl deltadecalactone, massoia lactone, deltadecalactone, tuberolactone), methyl sorbate, divanillin, 4-hydroxy-2(or 5)-ethyl-5(or 2)-methyl-3(2H)furanone, 2-hydroxy-3-methyl-2-cyclopentenone, 3-hydroxy-4,5-dimethyl-2(5H)-furanone, amyl acetate, ethyl butyrate, ethyl n-butyrate, isoamyl butyrate, 3-methyl ethyl butyrate, ethyl n-hexanoate, allyl n-hexanoate, n-hexyl n-butyrate, n-octanoic acid ethyl ester, ethyl-3-methyl-3-phenyl glycidate, ethyl-2-trans-4-cis-decadienoate, 4-(p-hydroxyphenyl)-2-butanone, 1,1-dimethoxy-2,2,5-trimethyl-4-hexane, 2,6-dimethyl-5-heptene-1-al, phenylacetaldehyde, 2-methyl-3-(methylthio)furane, 2-methyl-3-furanethiol, bis(2-methyl-3-furyl)disulfide, furfuryl mercaptan, methional, 2-acetyl-2-thiazoline, 3-mercapto-2-pentanone, 2,5-dimethyl-3-furanethiol, 2,4,5-trimethyl thiazol, 2-acetyl thiazol, 2,4-dimethyl-5-ethyl thiazol, 2-acetyl-1-pyrroline, 2-methyl-3-ethyl pyrazine, 2-ethyl-3,5-dimethyl pyrazine, 2-ethyl-3,6-dimethyl pyrazine, 2,3-diethyl-5-methyl pyrazine, 3-isopropyl-2-methoxy pyrazine, 3-isobutyl-2-methoxy pyrazine, 2-acetyl pyrazine, 2-pentyl pyridine, (E,E)-2,4-decadienal, (E,E)-2,4-nonadienal, (E)-2-octenal, (E)-2-nonenal, 2-undecenal, 12-methyl tridecanal, 1-penten-3-one, 4-hydroxy-2,5-dimethyl-3(2H)-furanone, guaiacol, 3-hydroxy-4,5-dimethyl-2(5H)-furanone, 3-hydroxy-4-methyl-5-ethyl-2(5H)-furanone, cinnamaldehyde, cinnamyl alcohol, methyl salicylate, isopulegol as well as stereoisomers, enantiomers, positional isomers, diastereomers, cis/trans-isomers or epimers of these substances, respectively,
- compounds having one, more or all of the taste impressions sweet, umami, warming and tingling and taste modulators/modifiers, in particular naturally occurring sweet tasting compounds (in particular ones, which are contained in plant extracts), for example, sweet tasting carbohydrates (e.g. saccharose, trehalose, lactose, maltose, melicitose, melibiose, raffinose, palatinose, lactulose, D-fructose, D-glucose, D-galactose, L-rhamnose, D-sorbose, D-mannose, D-tagatose, D-arabinose, L-arabinose, D-ribose, D-glyceraldehyde, maltodextrines), sugar alcohols (e.g erythritol, threitol, arabitol, ribitol, xylitol, sorbitol, mannitol, maltitol, isomaltitol, dulcitol, lactitol), proteins (e.g. miraculin, pentaidin, monellin, thaumatin, curculin, brazzein, mabinlin), D-amino acids (e.g. D-phenylalanine, D-tryptophan) or amino acids and/or proteins, which are contained in extracts from natural sources or fractions thereof, neohesperidin dihydrochalcone, naringin dihydrochalcone, steviol gylcosides, steviosides, steviolbioside, rebaudiosides, rebaudioside A, rebaudioside B, rebaudioside C, rebaudioside D, rebaudioside E, rebaudioside F, rebaudioside G, rebaudioside H, dulcosides, rubusoside, suavioside A, suavioside B, suavioside G, suavioside H, suavioside I, suavioside J, baiyunoside 1, baiyunoside 2, phlomisoside 1, phlomisoside 2, phlomisoside 3, as well as phlomisoside 4, abrusoside A, abrusoside B, abrusoside C, abrusoside D, cyclocaryoside A und cyclocaryoside I, oslandin, polypodoside A, strogin 1, strogin, 2 strogin 4, selligueanin A, dihydroquercetin-3-acetate, perillartine, telosmoside A15, periandrin I-V, pterocaryoside, cyclocaryoside, mukurozioside, trans-anethol, trans-cinnamaldehyd, bryoside, bryonoside, bryonodulcoside, carnosifloside, scandenoside, gypenoside, trilobatin, phloridzin, dihydroflavanoles, hematoxylin, cyanin, chlorogenic acid, albiziasaponin, telosmoside, gaudichaudioside, mogrosides, mogroside V, hernandulcine, monatin, glycyrrhetinic acid and its derivates, in particular glycyrrhetin (preferably as ammonium salt) and phyllodulcin, wherein in the case of the naturally occurring sweeteners, particularly also those, which are contained in extracts or enriched fractions of those extracts, are preferred, e.g. in thaumatococcus extracts (thaumatococcus daniellii), extracts from stevia ssp. (in particular stevia rebaudiana), swingle extract (momordica or siratia grosvenorii, Luo-Han-Guo), extracts from glycerrhyzia ssp. (in particular glycerrhyzia glabra), rubus ssp. (in particular rubus suavissimus), citrus extracts, extracts from lippia dulcis, neohesperidin dihydrochalcon, naringin dihydrochalcone, stevioside, steviolbioside, rebaudiosides, in particular rebaudioside A, rebaudioside B, rebaudioside C, rebaudioside D, rebaudioside E, rebaudioside F, rebaudioside G, rebaudioside H, dulcosides and rubusoside, suavioside A, suavioside B, suavioside G, suavioside H, suavioside I, suavioside J, baiyunoside 1, baiyunoside 2, phlomisoside 1, phlomisoside 2, phlomisoside 3, as well as phlomisoside 4, abrusoside A, abrusoside B, abrusoside C, abrusoside D, cyclocaryoside A und cyclocaryoside I, oslandin, polypodoside A, strogin 1, strogin, 2 strogin 4, selligueanin A, dihydroquercetin-3-acetate, perillartine, telosmoside A15, periandrin I-V, pterocaryoside, cyclocaryoside, mukurozioside, trans-anethol, trans-cinnamaldehyd, bryoside, bryonoside, bryonodulcoside, carnosifloside, scandenoside, gypenoside, trilobatin, phloridzin, dihydroflavanoles, hematoxylin, cyanin, chlorogenic acid, albiziasaponin, telosmoside, gaudichaudioside, mogrosides, mogroside V, hernandulcine, monatin, phyllodulcin, glycyrrhetinic acid and its derivates, in particular its glycosides such as glycyrrhetin and the physiological acceptable salts of those compounds, in particular their sodium, potassium, calcium or ammonium salts,
- flavor compounds and fragrance compounds of extracts or enriched fractions of the extracts selected from the group consisting of thaumatococcus extracts (thaumatococcus daniellii), extracts from stevia ssp. (in particular stevia rebaudiana), swingle extract (momordica or siratia grosvenorii, Luo-Han-Guo), extracts from glycerrhyzia ssp. (in particular glycerrhyzia glabra), rubus ssp. (in particular rubus suavissimus), citrus extracts, extracts from lippia dulcis, extracts from mycetia balansae;
- taste modifiers, in particular monosodium glutamate, free glutamic acid, nucleotides (e.g. adenosine-5'-monophosphate, cytidine-5'-monophosphate, inosine-5'-monophosphat, guanosine-5'-monophosphate), or their pharmaceutically acceptable salts, strombines, in particular as described in WO 2010 100,589, theogalline, in particular as descibed in JP 2007 110,988, pyridine betaine compounds, in particular as described in EP 1,291,342, glutamic acid glycosides, in particular as described in WO 2002 087,361, malic acid glycosides, in particular as described in WO 2006 003,107, glutathione derivates, in particular as described in EP 181,421 or WO 2007 042,273, lactisoles, hydroxyflavanones (e.g. eriodictyol, homoeriodictyol or their sodium salts), in particular according to EP 1 258 200, hesperetin, in particular according to EP 1,909,599, phloretin, in particular according to EP 1,972,203 or EP 1,998,636, hydroxyflavanes, in particular according to US 2010 292,175, 4-hydroxychalcones, in particular according to EP 1 972 203, compounds of extracts based on hydrangea dulcis, in particular according to EP 2,298,084, or rubus ssp., in particular according to US Provisional Application 61/333,435 and related publications; compounds of mixtures of whey protein with lecithines, of yeast extracts, of plant hydrolysates, of powdered vegetables (e.g. onion powder, tomato powder), of plant extracts (e.g. of lovage or of mushrooms such as shiitake), of marine algae and mineral salt mixtures, in particular of mineral salt mixtures, in particular according to US 2009 214,728 and related publications,

- flavor compounds providing or enhancing one, more or all of the taste impressions umami, kokumi and salty, in particular compounds as disclosed in US 2004 0202619, US 2004 0202760, US 2006 0057268 and US 2006 0068071, in particular (2E, 6Z)-N-cyclopropyl nona-2,6-dienamide (FEMA 4087; Flavis 16.093), (2E,6Z)-N-ethyl nona-2,6-dienamide (FEMA 4113; Flavis 16.094) and N-[(2E)-3,7-dimethylocta-2,6-dienyl]cyclopropyl carboxamide (FEMA 4267; Flavis 16.095), the chemical structures as described in US2005 0084506, in particular N'-[(2-methoxy-4-methylphenyl)methyl]-N-[2-(5-methyl-2-pyridyl)ethyl]oxamide (FEMA 4234; Flavis 16.190), N'-[(2,4-dimethoxyphenyl)methyl]-N-[2-(2-pyridyl)ethyl]oxamide (FEMA 4233; Flavis 16.099), N'-[(2-methoxy-4-methyl-phenyl)methyl]-N-[2-(2-pyridyl)ethyl]oxamide (FEMA 4231; Flavis 16.101), N-(1-propylbutyl)-1,3-benzodioxole-5-carboxamide (FEMA 4232; Flavis 16.098), and the chemical structures as described in WO/2011/004016, in particular 1-(2-hydroxy-4-isobutoxy-phenyl)-3-(2-pyridyl)propane-1-one (FEMA 4722) and 1-(2-hydroxy-4-methoxy-phenyl)-3-(2-pyridyl)propane-1-one (FEMA 4723),
- warming agents, in particular vanillyl alcohol n-butyl ether, vanillyl alcohol n-propyl ether, vanillyl alcohol isopropyl ether, vanillyl alcohol isobutyl ether, vanillyl alcohol n-amino ether, vanillyl alcohol isoamyl ether, vanillyl alcohol n-hexyl ether, vanillyl alcohol methyl ether, vanillyl alcohol ethyl ether, gingerol, shogaol, paradol, zingerone, capsaicin, dihydrocapsaicin, nordihydrocapsaicin, homocapsaicin, homodihydrocapsaicin, iso-propyl alcohol, iso-amylalcohol, benzyl alcohol, eugenol, cinnamon oil, cinnamic aldehyde,
- pungent compounds, in particular aromatic isothiocyanates, such as for example phenylethyl isothiocyanate, allyl isothiocyanate, cyclopropyl isothiocyanate, butyl isothiocyanate, 3-methyl thiopropyl isothiocyanate, 4-hydroxybenzyl isothiocyanate, 4-methoxybenzyl isothiocyanate.

Contaminants or compounds with a negative taste effect may also be isolated by using the method described herein, in particular xanthine alkaloids, xanthines (caffeine, theobromine, theophylline and methylxanthines), alkaloids (quinine, brucine, strychnine, nicotine), phenolic glycosides (e.g. salicin, arbutin), flavonoid glycosides (e.g. neohesperidine, hesperidine, naringin, quercitrin, rutin, hyperoside, quercetin-3-O-glucoside, myricetin-3-O-glycoside), chalcones or chalcone glycosides (e.g. phloridzin, phloridzin xyloside), hydrolyzable tannins (gallic acid or ellagic acid esters of carbohydrates, e.g. pentagalloyl glucose, tannic acid), non-hydrolyzable tannins (if applicable galloylated catechins, gallocatechins, epigallocatechins or epicatechins and their oiligomers, e.g. proanthyocyanidins or procyanidins, thearubigenins), flavons (e.g. quercetin, taxifolin, myricetin), phenols such as e.g. salicin, polyphenols (e.g. (oryzanol, caffeic acid and their esters (e.g. chlorogenic acid and isomers)), terpenoide bitter and tanning substances (e.g. limonoids such as limonin or nomilin from citrus fruits, lupolones und humolones from hop, iridoids, secoiridoids), absinthin from vermouth, amarogentin from gentian, metallic salts (in particular potassium, magnesium and calcium salts, potassium chloride, potassium gluconate, potassium carbonate, potassium sulfate, potassium lactate, potassium glutamate, potassium succinate, potassium malate, sodium sulfate, magnesium sulfate, aluminium salts, zinc salts, tin salts, iron-(II)-salts, iron-(III)-salts, chromium-(II)-picolinate), pharmaceutical agents (e.g. fluoroquinolone antibiotics, paracetamol, aspirin, beta-lactam antibiotics, ambroxol, propylthiouracil [PROP], guaifenesin), vitamins (for example vitamin H, vitamins from the B-group such as vitamin B1, B2, B6, B12, niacin, panthotenic acid), denatonium benzoate, sucralose octaacetate, urea, unsaturated fatty acids, in particular unsaturated fatty acids in emulsions, bitter/astringent tasting amino acids (e.g. leucine, isoleucine, valine, tryptophan, proline, histidine, tyrosine, lysine or phenylalanine) and bitter or astringent tasting peptides and proteins (in particular peptides with an amino acid from the group leucine, isoleucine, valine, tryptophan, proline or phenylalanine at the N- or C-terminus), saponins, in particular soy saponins, isoflavonoids (in particular genistein, daidzein, genistin, daidzin, their glycosides and acylated glycosides).

Compounds having a bitter and/or astringent taste, which may also be isolated by using the method described herein, are preferably selected from the group consisting of xanthine alkaloids, xanthines (caffeine, theobromine, theophylline), alkaloids (quinine, brucine, strychnine, nicotine), phenolic glycosides (e.g. salicin, arbutin), flavonoid glycosides (e.g. neohesperidine, eriocitrin, neoeriocitrin, narirutin, hesperidin, naringin), chalcones or chalcone glycosides, dihydrochalcone glycosides (phloridzin, trilobatin), hydrolyzable tannins (gallic acid or ellagic acid esters of carbohydrates, e.g. pentagalloyl glucose), non-hydrolyzable tannins (if applicable galloylated catechins or epicatechins and their oligomers, e.g. proanthyocyanidins or procyanidins, thearubigenins), flavons and their glycosides (e.g. quercetin, quercitrin, rutin, taxifolin, myricetin, myricitrin), other polyphenols ((oryzanol, caffeic acid and their esters), terpenoide bitter substances (e.g. limonoids such as limonin or nomilin from citrus fruits, lupolones und humolones from hop, iridoids, secoiridoids), absinthin from vermouth, amarogentin from gentian, metallic salts (potassium chloride, sodium sulfate, magnesium sulfate, iron salts, aluminium salts, zinc salts), pharmaceutical agents (e.g. fluoroquinolone antibiotics, paracetamol, aspirin, beta-lactam antibiotics, ambroxol, propylthiouracil [PROP], guaifenesin), vitamins (for example vitamin H, vitamins from the B-group such as vitamin B1, B2, B6, B12, niacin, panthotenic acid), denatonium benzoate or other denatonium salts, sucralose octaacetate, urea, unsaturated fatty acids, in particular unsaturated fatty acids in emulsions, amino acids (e.g. leucine, isoleucine, valine, tryptophan, proline, histidine, tyrosine, lysine or phenylalanine), peptides (in particular peptides with an amino acid from the group leucine, isoleucine, valine, tryptophan, proline or phenylalanine at the N- or C-terminus).

The compounds listed above are provided in mixtures with one ore more other components, preferably as natural extracts from fresh, dried, roasted and/or fermented plants or plant parts.

In a preferred embodiment the composition consisting of the target compound(s) to be isolated and one or more further compounds provided in step (i) is selected from the group consisting of thaumatococcus extracts (thaumatococcus daniellii), extracts from stevia ssp. (in particular stevia rebaudiana), swingle extract (momordica or siratia grosvenorii, Luo-Han-Guo), extracts from glycerrhyzia ssp. (in particular glycerrhyzia glabra), rubus ssp. (in particular rubus suavissimus), citrus extracts, extracts from lippia dulcis, extracts from leaves, fruit, branches, roots, peel, pits or seeds for example from camellia sinensis, camellia japonica, coffea ssp., cocoa theobroma, vitis vinifera, citrus ssp. und hybrids, poncirus ssp. und hybrids, perilla, humulus lupulus or related species.

Astringent compounds are preferably provided in compositions containing isolated, native or partially hydrolysed and/or enriched plant proteins, in particular legume proteins, for example azuki bean protein, bean protein, pea protein, clover protein, alfalfa protein, lupine protein as well as compositions containing tannins, in particular vitis, leaf, stem, grape, grape peel, wine or grape seed extracts.

Furthermore, the compounds can be provided in soy-based compositions, in particular products from soy protein or other soy bean fractions, such as e.g. soy milk and derived products, beverages containing isolated or enzymatically treated soy protein, soy flour, soy lecithin containing compositions, fermented products like tofu or tempé or derived products and mixtures with fruit compositions and optional aroma compounds.

The method according to the invention is preferably used to isolate flavor and fragrance compounds (such as e.g. the ones listed above) on large scale to yield pure products. Alternatively, undesirable contaminants, such as compounds having a bitter and/or astringent, dry, dusty, floury, limy and/or metallic taste or after-taste often accompanied by one or more of the taste impressions bitter, dry, dusty, floury, limy and/or metallic, are quantitatively removed from a mixture to increase the quality of a large-scale product. The method can be applied to mixtures from various sources including natural extracts as well as reaction mixtures, which are both of industrial relevance. Examples of sources are found in the above listings.

Therefore, in a preferred embodiment, the composition consisting of the target compound(s) to be isolated and one or more further compounds provided in step (i) has a volume of 100 I or more, preferably of 1000 I or more.

In a further preferred embodiment, the mixture, which is obtained in step (iii) by mixing the aptamer(s) with the composition consisting of or comprising the target compound(s) to be isolated and one or more further compounds, has a volume of 100 I or more, preferably of 1000 I or more.

Isolation processes on industrial scale using aptamer capture agents may sometimes be considered as unattractive because the production costs of sufficient amounts of capture agent to ensure quantitative isolation quickly become limiting. However, the method according to the invention can be scaled-up efficiently as the capture agents according to the invention can be regenerated and reused (as described above) to guarantee maximum yields.

In another preferred embodiment, the method according to the invention comprises the step
(iv) removing one, more or all further compounds of the composition which are not specifically bound to the aptamer(s) and/or removing (other) impurities by one or more washing steps, preferably by using a washing buffer.

Removal of compounds which are not specifically bound to the aptamer(s) and other impurities in an optionally repeated washing step ensures high purity of the product. The conditions during the washing step or during several washing steps independently can also be adjusted to vary the stringency of the binding. E.g. compounds non-specifically bound via electrostatic interactions can be removed by increasing the ionic strength.

In a further preferred embodiment, step (v) of the method according to the invention comprises destructing the three-dimensional structure or, respectively, the correct folding of the aptamer(s), so as to the specifically bound target compound(s) is/are released from the aptamer(s). As described above, methods to release the target compound(s) from the aptamer(s) comprise the destruction of the three-dimensional structure of the aptamer(s), which then are not capable of binding the target compound(s) any more. For example, temperature or pH jumps as well as addition of chemical agents such as EDTA can trigger unfolding or refolding (cf. above).

Preferably the destruction of the three-dimensional fold is reversible so that the aptamer(s) can be reused, but alternatively the aptamer(s) can also be cleaved to ensure complete release of the target compound(s).

In a preferred embodiment, the total amount of isolated target compound(s) or, respectively, the total amount of target compound(s) being released in step (v) is 50 wt.% or more, preferably 60 wt.% or more, more preferably 70 wt.% or more, in particular 80 or even 90 wt.% or more, based on the total amount of target compound(s) present in the composition provided in step (i).

A number of methods to release the target compound(s) from the aptamer(s) have been described above. The optimal conditions for the preferred quantitative release to ensure maximum yield of the target compound(s) based on the amount of target compound(s) present in the composition provided in step (i) depend on the target compound/aptamer combination and can be determined experimentally by a person skilled in the art.

The following examples and figures are added to illustrate the method according to the invention.

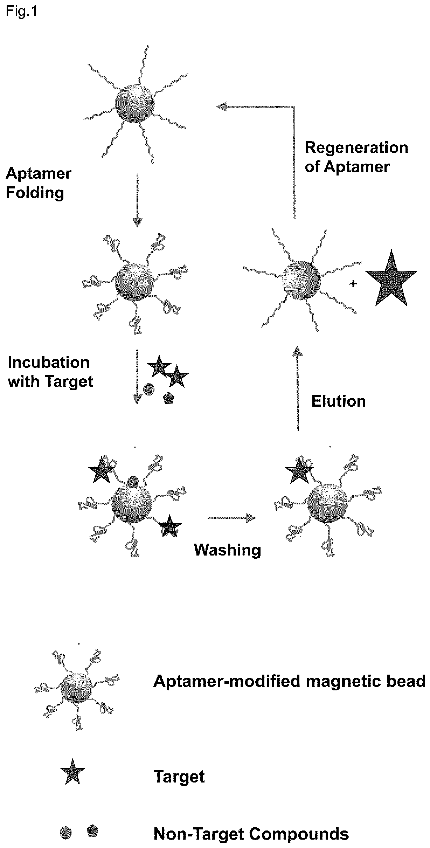

- Figure 1:: Schematic view of an exemplary method for isolating compounds using aptamer-modified magnetic beads.
- Figure 2:: Chemical structures of theophylline, caffeine and theobromine (see Example 1).
- Figure 3:: Theophylline, caffeine and theobromine concentrations in different fractions during theophylline isolation (see Example 1). Sample: Equimolar mixture of caffeine, theobromine and theophylline, DI: Supernatant after incubation of the sample with the aptamer-modified magnetic beads, WF1-WF8: Washing fractions, E1-E3: elution fractions.

### Example 1: Isolation of theophylline from a mixture with caffeine and theobromine

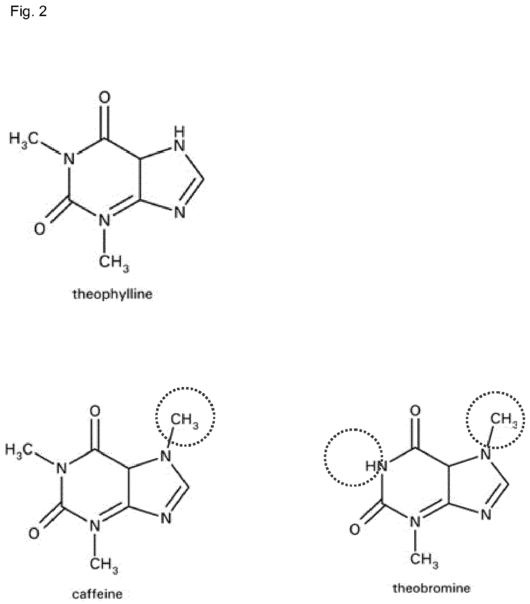

Utilizing the method according to the invention (as described above), an aptamer selected against theophylline (Jenison et al., Science, 1994, 263, 1425-1429) was used to purify/isolate theophylline from a mixture with the chemically related compounds theobromine and caffeine (see Figure 2).

The aptamer-construct used in this Example was a DNA/RNA chimera with the sequence CTC ATC TGT GAT CTA AGG CGA UAC CAG CCG AAA GGC CCU UGG CAG CGU C designed by Chavez et al. (Biosens Bioelectron, 2010, 263 (1), 23-28).

The aptamer was immobilized onto carboxyl-modified magnetic beads (BioMag® Maxi Carboxyl, Bangs Laboratories, Inc, USA) via a 5' terminal amino C6 linker. In brief, the immobilization of the aptamer was performed as follows: 100 µl of carboxyl-terminated magnetic beads (50 mg/ml) were washed with 25 mM MES (2-(N-morpholino)ethanesulfonic acid) pH 6.0 twice. The buffer was removed by magnetic separation and replaced by 100 µl of 25 µM aptamer in 25 mM MES pH 6.0 and 30 µl of a solution of EDC (1-ethyl-3-(3-dimethyl aminopropyl) carbodiimide) in cold MES pH 6.0 was added. The reaction was performed for 16 h at 4°C with gentle agitation. To remove excess aptamer, the beads were washed with 100 µl 50 mM Tris, pH 7.4 four times for 15 min each. By measuring the absorbance (at 260 nm) of the original aptamer solution, the solution after conjugation and all washing fractions, the amount of immobilized aptamer was calculated to be 423 ± 8 pmol/mg beads.

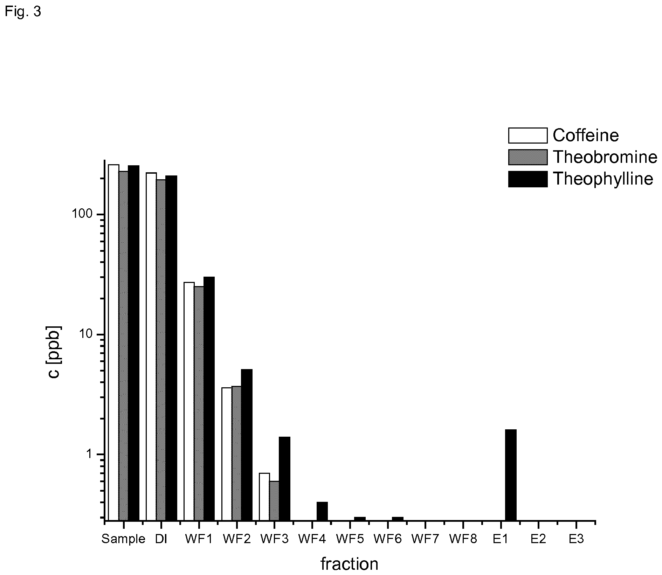

In order to achieve optimal aptamer folding, the beads were incubated in the aptamers selection buffer (100 mM HEPES, 50 mM NaCl, 5 mM MgCl2, pH 7.3 (cf. Zimmermann et al., RNA, 2000, 6, 659-667). Incubation with the equimolar mixture of theophylline, theobromine, and caffeine was performed at 65 °C for 10 min followed by 1 h incubation at room temperature. To remove non-specifically bound compounds, the magnetic beads were washed with selection buffer several times. The effect of different elution strategies (100 mM EDTA, denaturation of the aptamer at 95°C, urea, pH shift (7.3 -> 5)) and combinations of these strategies were investigated resulting in an optimal elution via pH shift (100 mM HEPES, 50 mM NaCl, pH5) at 95°C for 15 min. Utilizing this protocol, 97% of the theophylline bound to the aptamer-modified magnetic beads was eluted. Within the elution fractions, no remaining caffeine or theobromine could be detected (see Figure 3) demonstrating the excellent specificity of the aptamer-based extraction method.

Furthermore, the regeneration of the aptamer-modified magnetic beads was demonstrated. The magnetic beads were washed with selection buffer and used in another cycle of theophylline binding and elution without loss of binding capacity.

## Claims

1. Method for isolating, preferably in preparative scale, one or more target compounds, wherein the or, respectively, one, more or all of the target compounds are selected from the group consisting of flavor compounds and fragrance compounds, in particular compounds having one, more or all of the taste impressions sweet, umami, warming and tingling, and compounds having a bitter and/or an astringent taste impression, and compounds with flavor and/or fragrance modifying properties,
comprising the following steps:
(i) providing a composition consisting of the target compound(s) to be isolated and one or more further compounds,
(ii) providing one or more aptamers having specific binding capability towards the target compound to be isolated or, respectively, towards one, more or all of the target compounds to be isolated,
wherein the aptamer(s) is/are immobilized, preferably covalently immobilized, on a support, the support being preferably selected from the group consisting of magnetic particles, organic polymers, inorganic polymers, bio-polymers, membrane adsorbers and monolithic materials,
(iii) mixing the aptamer(s) with the composition consisting of the target compound(s) to be isolated and one or more further compounds, and specifically binding the compound(s) to be isolated to the aptamer(s),
(iv) optionally removing one, more or all compounds of the composition which are not specifically bound to the aptamer(s) and/or removing (other) impurities, and
(v) releasing the bound target compound(s) from the aptamer(s).

2. Method according to claim 1, wherein step (iii) comprises incubating the resulting mixture, which is obtained by mixing the aptamer(s) with the composition consisting of the target compound(s) to be isolated and one or more further compounds, under conditions allowing the target compound(s) to specifically bind to the aptamer(s).

3. Method according to claim 2, wherein the conditions in step (iii) are such that a correct folding of the aptamer(s) is obtained or, respectively, maintained.

4. Method according to any of the preceding claims, additionally comprising the following step:
(vi) isolating the target compound(s) released in step (v).

5. Method according to any of the preceding claims, additionally comprising the following step:
(vii) regenerating the immobilized aptamer(s), so as to the aptamer(s) can be re-used in a subsequent isolation process.

6. Method according to any of the preceding claims, wherein step (v) comprises
- setting the temperature of the mixture resulting in step (iv) such that the specifically bound target compound(s) is/are released from the aptamer(s),
and/or
- adjusting the pH of the mixture resulting in step (iv) such that the specifically bound target compound(s) is/are released from the aptamer(s),
and/or
- using one or more chemical substances, preferably EDTA, for releasing the bound target compound(s) from the aptamer(s),preferably wherein step (v) comprises
- adjusting the pH of the mixture resulting in step (iv) such that the specifically bound target compound(s) is/are released from the aptamer(s),
and/or
- using one or more chemical substances, preferably EDTA, for releasing the bound target compound(s) from the aptamer(s).

7. Method according to any of the preceding claims, wherein step (v) comprises
- setting the temperature and adjusting the pH of the mixture resulting in step (iv) such that the specifically bound target compound(s) is/are released from the aptamer(s).

8. Method according to any of the preceding claims, wherein the support, on which the aptamer(s) is/are immobilized, is selected from the group consisting of
organic polymers, preferably selected from the group consisting of polystyrenes, methacrylates and acrylamides,
inorganic polymers, preferably selected from the group consisting of silica and glass, bio-polymers, preferably selected from the group consisting of dextran, sepharose and cellulose,
membrane adsorbers, preferably of membrane adsorbers comprising or consisting of one or more materials being selected from the group consisting of cellulose, polyethersulfone and nylon, and
monolithic materials, preferably of monolithic materials comprising or consisting of one or more materials being selected from the group consisting of polymethacrylates, polystyrenes, polyacrylamides and silica.

9. Method according to any of the preceding claims, wherein the or, respectively, one, more or all of the target compounds are selected from the group consisting of
- aroma compounds, in particular acetophenone, allyl capronate, alpha-ionone, betaionone, anisaldehyde, anisyl acetate, anisyl formate, benzaldehyde, benzothiazole, benzyl acetate, benzyl alcohol, benzyl benzoate, butyl butyrate, butyl capronate, butylidenephthalide, carvone, camphene, caryophyllene, cineole, cinnamyl acetate, citrale, citronellol, citronellal, citronellyl acetate, cyclohexyl acetate, cymene, damascone, decalactone, dihydrocumarine, dimethyl anthranilate, dodecalactone, ethoxyethyl acetate, ethyl butyric acid, ethyl butyrate, ethyl caprinate, ethyl capronate, ethyl crotonate, ethyl furaneol, ethyl guaiacol, ethyl isobutyrate, ethyl isovalerate, ethyl lactate, ethylmethyl butyrate, ethyl propionate, eucalyptol, eugenol, ethyl heptylate, 4-(p-hydroxyphenyl)-2-butanone, gamma-decalactone, geraniol, geranyl acetate, grapefruit aldehyde, methyl dihydrojasmonate (e.g. Hedion(R)), heliotropin, 2-heptanone, 3-heptanone, 4-heptanone, trans-2-heptenal, cis-4-heptenal, trans-2-hexenal, cis-3-hexenol, trans-2-hexenoic acid, trans-3-hexenoic acid, cis-2-hexenyl acetate, cis-3-hexenyl acetate, cis-3-hexenyl capronate, trans-2-hexenyl capronate, cis-3-hexenyl formate, cis-2-hexyl acetate, cis-3-hexyl acetate, trans-2-hexyl acetate, cis-3-hexyl formate, para-hydroxybenzyl aceton, isoamyl alcohol, isoamyl isovalerate, isobutyl butyrate, isobutyraldehyde, isoeugenol methyl ether, isopropylmethyl thiazole, lauric acid, levulinic acid, linalool, linalool oxide, linalyl acetate, menthol, menthofuran, methyl anthranilate, methyl butanol, methyl butyric acid, 2-methylbutyl acetate, methyl capronate, methyl cinnamate, 5-methyl furfural, 3,2,2-methyl cyclopentenolone, 6,5,2-methyl heptenone, methyl dihydrojasmonate, methyl jasmonate, 2-methylmethyl butyrate, 2-methyl-2-pentenoic acid, methyl thio butyrate, 3,1-methyl thiohexanol, 3-methyl thiohexyl acetate, nerol, neryl acetate, trans,trans-2,4-nonadienal, 2,4-nonadienol, 2,6-nonadienol, nootkatone, delta-octalactone, gamma-octalactone, 2-octanol, 3-octanol, 1,3-octenol, 1-octyl acetate, 3-octyl acetate, palmitic acid, paraldehyde, phellandrene, pentanedione, phenylethyl acetate, phenylethyl alcohol, phenylethyl alcohol, phenylethyl isovalerate, piperonal, propionaldehyde, propyl butyrate, pulegone, pulegol, sinensal, sulfurol, terpinene, terpineol, terpinolene, 8,3-thiomenthanone, 4,4,2-thiomethyl pentanone, thymol, delta-undecalactone, gamma-undecalactone, valencene, valeric acid, vanillin, acetoin, ethyl vanillin, ethylvanillin isobutyrate (= 3-ethoxy-4-isobutyryl oxybenzaldehyde), 2,5-dimethyl-4-hydroxy-3(2H)-furanone and its derivates (preferably homofuraneol (= 2-ethyl-4-hydroxy-5-methyl-3(2H)-furanone), homofuronol (= 2-ethyl-5-methyl-4-hydroxy-3(2H)-furanone and 5-ethyl-2-methyl-4-hydroxy-3(2H)-furanone), maltol and maltol derivates (preferably ethyl maltol), cumarine, gamma-lactones (preferably gamma-undecalactone, gamma-nonalactone, gamma-decalactone), delta-lactones (preferably 4-methyl deltadecalactone, massoia lactone, deltadecalactone, tuberolactone), methyl sorbate, divanillin, 4-hydroxy-2(or 5)-ethyl-5(or 2)-methyl-3(2H)furanone, 2-hydroxy-3-methyl-2-cyclopentenone, 3-hydroxy-4,5-dimethyl-2(5H)-furanone, amyl acetate, ethyl butyrate, ethyl n-butyrate, isoamyl butyrate, 3-methyl ethyl butyrate, ethyl n-hexanoate, allyl n-hexanoate, n-hexyl n-butyrate, n-octanoic acid ethyl ester, ethyl-3-methyl-3-phenyl glycidate, ethyl-2-trans-4-cis-decadienoate, 4-(p-hydroxyphenyl)-2-butanone, 1,1-dimethoxy-2,2,5-trimethyl-4-hexane, 2,6-dimethyl-5-heptene-1-al, phenylacetaldehyde, 2-methyl-3-(methylthio)furane, 2-methyl-3-furanethiol, bis(2-methyl-3-furyl)disulfide, furfuryl mercaptan, methional, 2-acetyl-2-thiazoline, 3-mercapto-2-pentanone, 2,5-dimethyl-3-furanethiol, 2,4,5-trimethyl thiazol, 2-acetyl thiazol, 2,4-dimethyl-5-ethyl thiazol, 2-acetyl-1-pyrroline, 2-methyl-3-ethyl pyrazine, 2-ethyl-3,5-dimethyl pyrazine, 2-ethyl-3,6-dimethyl pyrazine, 2,3-diethyl-5-methyl pyrazine, 3-isopropyl-2-methoxy pyrazine, 3-isobutyl-2-methoxy pyrazine, 2-acetyl pyrazine, 2-pentyl pyridine, (E,E)-2,4-decadienal, (E,E)-2,4-nonadienal, (E)-2-octenal, (E)-2-nonenal, 2-undecenal, 12-methyl tridecanal, 1-penten-3-one, 4-hydroxy-2,5-dimethyl-3(2H)-furanone, guaiacol, 3-hydroxy-4,5-dimethyl-2(5H)-furanone, 3-hydroxy-4-methyl-5-ethyl-2(5H)-furanone, cinnamaldehyde, cinnamyl alcohol, methyl salicylate, isopulegol as well as stereoisomers, enantiomers, positional isomers, diastereomers, cis/trans-isomers or epimers of these substances, respectively,
- compounds having one, more or all of the taste impressions sweet, umami, warming and tingling and taste modulators/modifiers, in particular naturally occurring sweet tasting compounds (in particular ones, which are contained in plant extracts), for example sweet tasting carbohydrates (e.g. saccharose, trehalose, lactose, maltose, melicitose, melibiose, raffinose, palatinose, lactulose, D-fructose, D-glucose, D-galactose, L-rhamnose, D-sorbose, D-mannose, D-tagatose, D-arabinose, L-arabinose, D-ribose, D-glyceraldehyde, maltodextrines), sugar alcohols (e.g erythritol, threitol, arabitol, ribitol, xylitol, sorbitol, mannitol, maltitol, isomaltitol, dulcitol, lactitol), proteins (e.g. miraculin, pentaidin, monellin, thaumatin, curculin, brazzein, mabinlin), D-amino acids (e.g. D-phenylalanine, D-tryptophan) or amino acids and/or proteins, which are contained in extracts from natural sources or fractions thereof, neohesperidin dihydrochalcone, naringin dihydrochalcone, steviol gylcosides, steviosides, steviolbioside, rebaudiosides, rebaudioside A, rebaudioside B, rebaudioside C, rebaudioside D, rebaudioside E, rebaudioside F, rebaudioside G, rebaudioside H, dulcosides, rubusoside, suavioside A, suavioside B, suavioside G, suavioside H, suavioside I, suavioside J, baiyunoside 1, baiyunoside 2, phlomisoside 1, phlomisoside 2, phlomisoside 3, as well as phlomisoside 4, abrusoside A, abrusoside B, abrusoside C, abrusoside D, cyclocaryoside A and cyclocaryoside I, oslandin, polypodoside A, strogin 1, strogin, 2 strogin 4, selligueanin A, dihydroquercetin-3-acetate, perillartine, telosmo-side A15, periandrin I-V, pterocaryoside, cyclocaryoside, mukurozioside, trans-anethol, trans-cinnamaldehyd, bryoside, bryonoside, bryonodulcoside, carnosifloside, scandenoside, gypenoside, trilobatin, phloridzin, dihydroflavanoles, hematoxylin, cyanin, chlorogenic acid, albiziasaponin, telosmoside, gaudichaudioside, mogrosides, mogroside V, hernandulcine, monatin, glycyrrhetinic acid and its derivates, in particular glycyrrhetin (preferably as ammonium salt) and phyllodulcin, wherein in the case of the naturally occurring sweeteners, particularly also those, which are contained in extracts or enriched fractions of those extracts, are preferred, e.g. in thaumatococcus extracts (thaumatococcus daniellii), extracts from stevia ssp. (in particular stevia rebaudiana), swingle extract (momordica or siratia grosvenorii, Luo-Han-Guo), extracts from glycerrhyzia ssp. (in particular glycerrhyzia glabra), rubus ssp. (in particular rubus suavissimus), citrus extracts, extracts from lippia dulcis, neohesperidin dihydrochalcon, naringin dihydrochalcone, steviosides, steviolbioside, rebaudiosides, rebaudioside A, rebaudioside B, rebaudioside C, rebaudioside D, rebaudioside E, rebaudioside F, rebaudioside G, rebaudioside H, dulcosides and rubusoside, suavioside A, suavioside B, suavioside G, suavioside H, suavioside I, suavioside J, baiyunoside 1, baiyunoside 2, phlomisoside 1, phlomisoside 2, phlomisoside 3, as well as phlomisoside 4, abrusoside A, abrusoside B, abrusoside C, abrusoside D, cyclocaryoside A and cyclocaryoside I, oslandin, polypodoside A, strogin 1, strogin, 2 strogin 4, selligueanin A, dihydroquercetin-3-acetate, perillartine, telosmoside A15, periandrin I-V, pterocaryoside, cyclocaryoside, mukurozioside, trans-anethol, trans-cinnamaldehyd, bryoside, bryonoside, bryonodulcoside, carnosifloside, scandenoside, gypenoside, trilobatin, phloridzin, dihydroflavanoles, hematoxylin, cyanin, chlorogenic acid, albiziasaponin, telosmoside, gaudichaudioside, mogrosides, mogroside V, hernandulcine, monatin, phyllodulcin, glycyrrhetinic acid and its derivates, in particular its glycosides such as glycyrrhetin and the physiological acceptable salts of those compounds, in particular their sodium, potassium, calcium or ammonium salts.
- flavor compounds and fragrance compounds of extracts or enriched fractions oft he extracts selected from the group consisting of thaumatococcus extracts (thaumatococcus daniellii), extracts from stevia ssp. (in particular stevia rebaudiana), swingle extract (momordica or siratia grosvenorii, Luo-Han-Guo), extracts from glycerrhyzia ssp. (in particular glycerrhyzia glabra), rubus ssp. (in particular rubus suavissimus), citrus extracts, extracts from lippia dulcis, extracts from mycetia balansae;
- taste modifier, in particular monosodium glutamate, free glutamic acid, nucleotides (e.g. adenosine-5'-monophosphate, cytidin-5'-monophosphate, inosine-5'-monophosphat, guanosine-5'-monophosphate), or their pharmaceutically acceptable salts, strombines, theogalline, pyridine betaine compounds, glutamic acid glycosides, malic acid glycosides, glutathione derivates, lactisoles, hydroxyflavanones (e.g. eriodictyol, homoeriodictyol or their sodium salts), hesperetin, phloretin, hydroxyflavanes, 4-hydroxychalcones, compounds of extracts based on hydrangea dulcis or rubus ssp.; compounds of mixtures of whey protein with lecithines, of yeast extracts, of plant hydrolysates, of powdered vegetables (e.g. onion powder, tomato powder), of plant extracts (e.g. of lovage or of mushrooms such as shiitake), of marine algae and mineral salt mixtures, in particular of mineral salt mixtures,
- flavor compounds providing or enhancing one, more or all of the taste impressions umami, kokumi and salty, in particular (2E, 6Z)-N-cyclopropyl nona-2,6-dienamide (FEMA 4087; Flavis 16.093), (2E,6Z)-N-ethyl nona-2,6-dienamide (FEMA 4113; Flavis 16.094) and N-[(2E)-3,7-dimethylocta-2,6-dienyl]cyclopropyl carboxamide (FEMA 4267; Flavis 16.095), the chemical structures as described in US2005 0084506, in particular N'-[(2-methoxy-4-methyl-phenyl)methyl]-N-[2-(5-methyl-2-pyridyl)ethyl]oxamide (FEMA 4234; Flavis 16.190), N'-[(2,4-dimethoxyphenyl)methyl]-N-[2-(2-pyridyl)ethyl]oxamide (FEMA 4233; Flavis 16.099), N'-[(2-methoxy-4-methylphenyl)methyl]-N-[2-(2-pyridyl)ethyl]oxamide (FEMA 4231; Flavis 16.101), N-(1-propylbutyl)-1,3-benzodioxole-5-carboxamide (FEMA 4232; Flavis 16.098), and the chemical structures as described in WO/2011/004016, in particular 1-(2-hydroxy-4-isobutoxyphenyl)-3-(2-pyridyl)propane-1-one (FEMA 4722) and 1-(2-hydroxy-4-methoxy-phenyl)-3-(2-pyridyl)propane-1-one (FEMA 4723),
- warming agents, in particular vanillyl alcohol n-butyl ether, vanillyl alcohol n-propyl ether, vanillyl alcohol isopropyl ether, vanillyl alcohol isobutyl ether, vanillyl alcohol n-amino ether, vanillyl alcohol isoamyl ether, vanillyl alcohol n-hexyl ether, vanillyl alcohol methyl ether, vanillyl alcohol ethyl ether, gingerol, shogaol, paradol, zingerone, capsaicin, dihydrocapsaicin, nordihydrocapsaicin, homocapsaicin, homodihydrocapsaicin, iso-propyl alcohol, iso-amylalcohol, benzyl alcohol, eugenol, cinnamon oil, cinnamic aldehyde,
- pungent compounds, in particular aromatic isothiocyanates, such as for example phenylethyl isothiocyanate, allyl isothiocyanate, cyclopropyl isothiocyanate, butyl isothiocyanate, 3-methyl thiopropyl isothiocyanate, 4-hydroxybenzyl isothiocyanate, 4-methoxybenzyl isothiocyanate.

10. Method according to any of the preceding claims, wherein the composition consisting of the target compound(s) to be isolated and one or more further compounds provided in step (i) has a volume of 100 l or more, preferably of 1000 l or more.

11. Method according to any of the preceding claims, wherein the mixture, which is obtained in step (iii) by mixing the aptamer(s) with the composition consisting of or comprising the target compound(s) to be isolated and one or more further compounds, has a volume of 100 I or more, preferably of 1000 l or more.

12. Method according to any of the preceding claims, wherein the composition consisting of the target compound(s) to be isolated and one or more further compounds provided in step (i) is selected from the group consisting of thaumatococcus extracts (thaumatococcus daniellii), extracts from stevia ssp. (in particular stevia rebaudiana), swingle extract (momordica or siratia grosvenorii, Luo-Han-Guo), extracts from glycerrhyzia ssp. (in particular glycerrhyzia glabra), rubus ssp. (in particular rubus suavissimus), citrus extracts, extracts from lippia dulcis, extracts from leaves, fruit, branches, roots, peel, pits or seeds for example from camellia sinensis, camellia japonica, coffea ssp., cocoa theobroma, vitis vinifera, citrus ssp. und hybrids, poncirus ssp. und hybrids, perilla, humulus, lupulus or related species.

13. Method according to any of the preceding claims, wherein the method comprises (iv) removing one, more or all further compounds of the composition which are not specifically bound to the aptamer(s) and/or removing (other) impurities by one or more washing steps, preferably by using a washing buffer.

14. Method according to any of the preceding claims, wherein step (v) comprises destructing the three-dimensional structure or, respectively, the correct folding of the aptamer(s), so as to the specifically bound target compound(s) is/are released from the aptamer(s).

15. Method according to any of the preceding claims, wherein the total amount of isolated target compound(s) or, respectively, the total amount of target compound(s) being released in step (v) is 50 wt.% or more, preferably 60 wt.% or more, more preferably 70 wt.% or more, in particular 80 or even 90 wt.% or more, based on the total amount of target compound(s) present in the composition provided in step (i).

## Patentansprüche

1. Verfahren zur Isolation, vorzugsweise im präparativen Maßstab, von einer oder mehrerer Zielverbindungen, wobei die oder jeweils eine, mehrere oder alle der Zielverbindungen ausgewählt sind aus der Gruppe bestehend aus Geschmacksverbindungen und Duftverbindungen, insbesondere Verbindungen die eine, mehrere oder alle der Geschmackseindrücke süß, umami, wärmend und prickelnd aufweisen, und Verbindungen die einen bitteren und/oder einen astringenten Geschmackseindruck aufweisen, und Stoffe mit Geschmacks- und/oder Duft modifizierenden Eigenschaften, umfassend die folgenden Schritte:
(i) Bereitstellen einer Zusammensetzung bestehend aus der/den zu isolierenden Zielverbindung(en) und einer oder mehrerer weiteren Verbindungen,
(ii) bereitstellen eines oder mehrerer Aptamere mit spezifischer Bindungsfähigkeit gegenüber der zu isolierenden Zielverbindung oder jeweils zu einer, mehrerer oder allen der zu isolierenden Zielverbindungen,
wobei das/die Aptamer(e) auf einem Träger immobilisiert werden, vorzugsweise kovalent immobilisiert, wobei der Träger vorzugsweise ausgewählt ist aus der Gruppe bestehend aus magnetischen Partikeln, organischen Polymeren, anorganischen Polymeren, Biopolymeren, Membranadsorbern und monolithischen Materialien,
(iii) mischen des Aptamers/der Aptamere mit der Zusammensetzung bestehend aus der/den zu isolierenden Zielverbindung(en) und einer oder mehrerer weiterer Verbindungen, und spezifisches Binden der zu isolierenden Verbindung(en) an das/die Aptamer(e),
(iv) optional Entfernen einer, mehrerer oder aller Verbindungen der Zusammensetzung welche nicht spezifisch an das/die Aptamer(e) gebunden sind und/oder Entfernen von (anderen) Verunreinigungen,
(v) freisetzen der gebundenen Zielverbindung(en) von dem/den Aptamer(en).

2. Verfahren nach Anspruch 1, wobei Schritt (iii) das Inkubieren der erhaltenen Mischung umfasst, welche durch das Mischen des/der Aptamers/Aptamere mit der Zusammensetzung bestehend aus der/den zu isolierenden Zielverbindung(en) und einer oder mehrerer weiterer Verbindungen, unter Bedingungen, die es der/den Zielverbindung(en) erlauben spezifisch an das/die Aptamer(e) zu binden, erhalten wird.

3. Verfahren nach Anspruch 2, wobei die Bedingungen in Schritt (iii) derart sind, das seine korrekte Faltung des Aptamers/der Aptamere erhalten oder beibehalten wird.

4. Verfahren nach einem der vorhergehenden Ansprüche, zusätzlich umfassen den folgenden Schritt:
(vi) Isolieren der in Schritt (v) freigesetzten Zielverbindung(en).

5. Verfahren nach einem der vorhergehenden Ansprüche, zusätzlich umfassen den folgenden Schritt:
(vii) Regenerieren des/der immobilisierten Aptamers/Aptamere, so dass das/die Aptamer(e) in einem nachfolgenden Isolierungsverfahren wiederverwendet werden kann/können.

6. Verfahren nach einem der vorhergehenden Ansprüche, wobei Schritt (v) umfasst
- einstellen der Temperatur der in Schritt (iv) erhaltenen Mischung derart, dass die spezifisch gebundene(n) Zielverbindung(en) von dem/den Aptamer(en) freigesetzt wird/werden und/oder
- anpassen des pH-Wertes der in Schritt (iv) erhaltenen Mischung derart, dass die spezifisch gebundene(n) Zielverbindung(en) von dem/den Aptamer(en) freigesetzt wird/werden und/oder
- Verwendung einer oder mehrerer chemischer Substanzen, vorzugsweise EDTA, für die Freisetzung der gebundenen Zielverbindung(en) von dem/den Apta mer(en), wobei Schritt (v) vorzugsweise umfasst
- anpassen des pH-Wertes der in Schritt (iv) erhaltenen Mischung derart, dass die spezifisch gebundene(n) Zielverbindung(en) von dem/den Aptamer(en) freigesetzt wird/werden und/oder
- Verwendung einer oder mehrerer chemischer Substanzen, vorzugsweise EDTA, für die Freisetzung der gebundenen Zielverbindung(en) von dem/den Apta mer(en.

7. Verfahren nach einem der vorhergehenden Ansprüche, wobei Schritt (v) umfasst
- Einstellen der Temperatur und Anpassen des pH-Wertes der in Schritt (iv) erhal tenen Mischung derart, dass die spezifisch gebundene(n) Zielverbindung(en) von dem/den Aptamer(en) freigesetzt wird/werden

8. Verfahren nach einem der vorhergehenden Ansprüche, wobei der Träger, auf dem das/die Aptamer(e) immobilisiert ist/sind ausgewählt ist aus der Gruppe bestehend aus
Organischen Polymeren, vorzugsweise ausgewählt aus der Gruppe bestehend aus Polystyrolen, Methacrylaten und Acrylamiden,
Anorganischen Polymeren, vorzugsweise ausgewählt aus der Gruppe bestehen aus Siliciumdioxid und Glas, Biopolymeren, vorzugsweise ausgewählt aus der Gruppe bestehen aus Dextran, Sepharose und Cellulose,
Membranadsorbern, vorzugsweise ais Membranadsorbern umfassend oder bestehend aus einem oder mehreren Materialien, die ausgewählt sind aus der Gruppe bestehend aus Cellulose, Polyethersulfon und Nylon, und
Monolithischen Materialien, vorzugsweise aus monolithischen Materialien umfassend oder bestehend aus einem oder mehreren Materialien, die ausgewählt sund aus der Gruppe bestehend aus Polymethacrylaten, Polystyrolen, Polyacrylamiden und Siliciumoxid.

9. Verfahren nach einem der vorhergehenden Ansprüche, wobei die oder jeweils eine, mehrere oder alle der Zielverbindungen ausgewählt ist aus der Gruppe bestehend aus
- Aromaverbindugen, insbesondere Acetophenon, Allyl-Capronat, alpha-lonon, be ta-lonon, Anisaldehyd, Anisylacetat, Anisylformiat, Benzaldehyd, Benzothiazol, Benzylacetat, Benzylalkohol, Benzylbenzoat, Butylbutyrat, Butylcapronat, Butylidenphthalid, Carmonon, Chenolacetat, Cineol, Cornophylacetat, Citronellal, Citronellol, Citronellal, Citronellylacetat, Cyclohexylacetat, Cymen, Damascon, Decalacton, Dihydrocumarin, Dimethylanthranilat, Dodecalacton, Ethoxyethyl acetat, Ethylbuttersäure, Ethylbutyrat, Ethylcaprinat , Ethylcapronat, Ethylcupa nol, Ethylguaiacol, Ethylisobutyrat, Ethylisovalerat, Ethyllactat, Ethylmethylbuty rat, Ethylpropionat, Eukalyptol, Euge-nol, Ethylheptylat, 4- (p-Hydroxyphenyl) -2-butanon, gamma (Z. B. Hedion (R)), Heli-otropin, 2-Heptanon, 3-Heptanon, 4-Heptanon, trans-2-heptenal, cis-4-heptenal, trans -2-hexenol, c-3-Hexensäure, trans-2-Hexensäure, trans-3-Hexensäure, cis-2-Hexenylacetat, cis-3-Hexe nylacetat, cis-3-Hexenylcapronat, trans-2-Hexensäure, Hexenylcapronat, cis-3-Hexenylformiat, cis-2-Hexylacetat, cis-3-Hexylacetat, trans-2-Hexylacetat, cis-3-Hexylformiat, para-Hydroxybenzylaceton, Isoamylalkohol, Isoamylisovalerat , Isobutylbutyrat, Isobutyraldehyd, Isoeugenolmethylether, Isopropylmethylthia zol, Laurinsäure, Levulinsäure, Linalool, Linalooloxid, Linalylacetat, Menthol, Menthofuran, Methylanthranilat, Methylbutanol, Methylbuttersäure, 2-Me thylbutyl Acetat, Methylcronat, Methylcinnamat, 5-Methylfurfural, 3,2,2-Me thylcyclopentenolon, 6,5,2-Methylheptenon, Methyldihydrojasmonat, Methyl jasmonat, 2-Methylmethylbutyrat, 2-Methyl-2-pentensäure , Methylthiohexanol, 3-Methylthiohexylacetat, Nerol, Nerylacetat, trans, trans-2,4-nonadienal, 2,4-Nonadienol, 2,6-Nonadienol, Nootkaton, Delta-Octalacto Ne, Gamma-Octalacton, 2-Octanol, 3-Octanol, 1,3-Octenol, 1-Octylacetat, 3-Octylacetat, Pal mitinsäure, Paraldehyd, Phellandren, Pentandion, Phenylethylacetat, Phe nylethylalkohol, Phenylethylalkohol, Phenylethylisovalerat , Piperonal, Propio naldehyd, Propylbutyrat, Pulegon, Pulegol, Sinus, Sulfurol, Terpinen, Terpineol, Terpinolen, 8,3-Thiomenthanon, 4,4,2-Thiomethylpentanon, Thymol, Delta-Un decalacton, Gamma-Undecalacton, Valencen, Valerie Säure, Vanillin, Aceto-in, Ethylvanillin, Ethylvanillinisobutyrat (= 3-Ethoxy-4-isobutyryloxybenzaldehyd), 2,5-Dimethyl-4-hydroxy-3 (2H) -furanon und dessen Derivate (vorzugsweise Ho mofuranol (= 2 -ethyl-4-hydroxy-5-methyl-3 (2H) -furanon), Homofuronol (= 2-Ethyl-5-methyl-4-hydroxy-3 (2H) -furanon und 5-Ethyl-2-methyl-4 -hydroxy-3 (2H) -furanon), Maltol und Maltolderivate (vorzugsweise Ethylmaltol), Cumarin, Gamma-Lactone (vorzugsweise Gamma-Undecalacton, Gamma-Nonalacton, Gamma-Decalacton), Delta-Lactone (vorzugsweise 4-met Dyladegalacton, Mas sensilicat, Deltadecalacton, Tuberolacton), Methylsorbat, Divanillin, 4-Hydroxy-2 (oder 5) -ethyl-5 (oder 2) -methyl-3 (2H) furanon, 2-Hydroxy-3-methyl- 2-Cyc lo pentenon, 3-Hydroxy-4,5-dimethyl-2 (5H) -furanon, Amylacetat, Ethylbutyrat, Ethyl-n-butyrat, Isoamylbutyrat, 3-Methylethylbutyrat, Ethyl-n-hexanoat, Allyl-n-hexanoat, N-Hexyl-n-butyrat, n-Octansäureethylester, Ethyl-3-methyl-3-phenylglycidat, Ethyl-2-trans-4-cis-decadienoat, 4- (p-Hydroxyphenyl) -2-bu tanon, 1,1-Dimethoxy-2,2,5-trimethyl-4-hexan, 2,6-Dimethyl-5-hepten-1-al, Phe nylacetaldehyd, 2-Methyl-3- (methylthio) furan, 2-Methyl-3 -Furanthiol, Bis (2-methyl-3-furyl) disulfid, Furfurylmercaptan, Methional-, 2-Acetyl-2-thiazolin, 3-Mercapto-2-pentanon, 2,5-Dimethyl-3-furanthiol, 2,4, 5-trimethylthiazol, 2-Acetylthiazol, 2,4-Dimethyl-5-ethylthiazol, 2-Acetyl-1-pyrrolin, 2-Methyl-3-ethylpyrazin, 2-Ethyl-3,5-dimethylpyrazin, 2 -ethyl-3,6-dimethylpyrazin, 2,3-Diethyl-5-methylpyr Azin, 3-lsopropyl-2-methoxypyrazin, 3-Isobutyl-2-me thoxypyrazin, 2-Acetylpyrazin, 2-Pentylpyridin, (E, E) -2,4-Decadienal, (E, E) -2, 4-nonadienal, (E) -2-octenal, (E) -2-nonenal, 2-undecenal, 12-Methyltridecanal, 1-Penten-3-on, 4-Hydroxy-2,5-dimethyl-3 (2H) -Furanon, Guaiacol, 3-Hydroxy-4,5-dimethyl-2 (5H) -furanon, 3-Hydroxy-4-methyl-5-ethyl-2 (5H) -furanon, Zimtalde hyd, Zimtalkohol, Methylsalicylat, Isopulegol sowie Stereoisomere, Enantiomere, Positionsisomere, Diastereomere, cis / trans-Isomere oder Epimere dieser Sub stanzen,
- Verbindungen mit einem, mehreren oder allen der Geschmackseindrücke süß, umami, wärmend und kribbelnd und Geschmacksmodulatoren / Modifikatoren, insbesondere natürlich vorkommende süß-schmeckende Stoffe (insbesondere solche, die in Pflanzenextrakten enthalten sind), zum Beispiel süß schmeckende Kohlenhydrate (wie z. B. Saccharose, Trehalose, Lactose, Maltose, Melicitose, Melibiose, Raffinose, Palatinose, Lactulose, D-Fructose, D-Glucose, D-Galactose, L-Rhamnose, D-Sorbose, D-Mannose, D-Tagatose, D-Arabinose, L-Arabinose, D-Ribose, D-Glycerinaldehyd, Maltodextrin), Zuckeralkohole (zB Erythrit, Threitol, Arabitol, Ribitol, Xylit, Sorbit, Mannit, Maltit, Isomaltitol, Dulcit, Lactitol), Proteine (z.B. Miraculin, Pentaidin, Monellin, Thaumatin, Curculin, Brazzein, Mabin lin), D-Aminosäuren (z.B. D-Phenylalanin, D-Tryptophan) oder Aminosäuren und / oder Proteine, die in Extrakten aus natürlichen Quellen oder Fraktionen davon enthalten sind, Neohesperidin-Dihydrochalcon, Naringin-Dihydrochalcon, Steviol-Glykosid, Stevioside, Steviolbiosid, Rebaudioside, Rebaudioside A, Rebaudiosid B, Rebaudiosid C, Rebaudiosid D, Rebaudiosid E, Rebaudiosid F, Rebaudiosid G, Re baudiosid H, Dulcoside, Rubusosid, Suaviosid A, Suaviosid B, Suaviosid G, Suavio sid H, Suaviosid I, Suaviosid J, Baiyunosid 1, Baiyunosid 2, Phlomisosid 1, Phlomi sosid 2, Phlomi-Sosid 3 sowie Phlomisosid 4, Abrusosid A, Abrusosid B, Abrusosid C, Abruososid D, Cyclocaryosid A und Cyclocaryosid I , Oslandin, Polypodosid A, Strogin 1, Strogin, 2 Strogin 4, Soldyananin A, Dihydroquercetin-3-acetat, Perillar tin, Telosmo-side A15, Periandrin IV, Pterocaryosid, Cyclocaryosid, Mukuroziosid, trans-Anethol, trans-Cinnamaldehyd, Bryosid, Bryonosulosid, Carnosiflosid, Scandenosid, Gypenosid, Trilobatin, Phloridzin, Dihydroflavanole, Hämatoxylin, Cyaninin, Chlorogensäure, Albiziasaponin, Telosmosid, Gaudichaudiosid, Mogroi de, Mogroside V, Hernandulcin, Monatin, Glycyrrhetinic acid und seine Derivate, insbesondere Glycyrrhetin (vorzugsweise als Ammoniumsalz) und Phyllodulcin, wobei im Falle der natürlich vorkommenden Süßstoffe, insbesondere auch sol che, die in Extrakten oder angereicherten Fraktionen dieser Extrakte enthalten sind, bevorzugt sind, z.B. In Thaumatococcus-Extrakten (thaumatococcus dani ellii), aus Stevia ssp. (insbesondere Stevia rebaudiana), Swingle-Extrakt (Momor dica oder Siriria grosvenorii, Luo-Han-Guo), Extrakte aus Glycerrhyzia ssp. (insbe sondere Glycerrhyzia glabra), Rubus ssp. (zB. Rubus suavissimus), Zitrus-Extrakte, Extrakte aus Lippia dulcis, Neohesperidin Dihydrochalcon, Naringin Dihydrochal con, Stevioside, Steviolbiosid, Rebaudioside, Rebaudiosid A, Rebaudiosid B, Re baudiosid C, Rebaudiosid D, Rebaudiosid E, Rebaudiosid F, Rebaudiosid G, Re baudiosid H , Diocoside 1, Phlomisosid 2, Phlomisosid 3, Phlomisosid 2, Phlomi sosid 3, Phlomisosid 4, Abrusosid A, Abrusosid B, Suaviosid H, Suaviosid H, Suavi osid H, Suaviosid I, Abrusosid C, Abrusosid D, Cyclocaryosid A und Cyclocaryosid I, Oslandin, Polypodosid A, Strogin 1, Strogin, 2 Strogin 4, Soldyanin A, Dihydro quercetin-3-acetat, Perillartin, Telosmosid A15, Periandrin IV, Pterocaryosid, Cyc locaryosid, Mukuroziosid, trans -Athol, trans-Cinnamaldehyd, Bryosid, Bryonosid, Bryonodulcosid, Carnosiflosid, Scandenosid, Gypenosid, Trilobatin, Phloridzin, Dihydroflavanole, Hämatoxylin, Cyanin, Chlorogensäure, Albiziasaponin, Telos mide, Gaudichaudiosid, Mogroside, Mogroside V, Hernandulcin, Monatin, Phyl lodulcin, Glycyrrhetinsäure und ihre Derivate, insbesondere ihre Glycoside wie Glycyrrhetin und die physiologisch annehmbaren Salze dieser Verbindungen, ins besondere ihr Natrium, Kalium, Calcium oder Ammoniumsalz;
- Geschmacksverbindungen und Duftstoffverbindungen von Extrakten oder ange reicherten Fraktionen von Extrakten, ausgewählt aus der Gruppe bestehend aus Thaumatococcus-Extrakten (Thaumatococcus daniellii), Extrakte aus Stevia ssp. (insbesondere Stevia rebaudiana), Swingle-Extrakt (Momordica oder Siriria grosvenorii, Luo-Han-Guo), Extrakte aus Glycerrhyzia ssp. (insbesondere Gly cerrhyzia glabra), Rubus ssp. (insbesondere Rubus suavissimus), Zitrus-Extrakte, Extrakte aus Lippia dulcis, Extrakte aus Mycetia balansae;
- Geschmacksmodifizierer, insbesondere Mononatriumglutamat, freie Glutamin säure, Nukleotide (z.B. Adenosin-5'-monophosphat, Cytidin-5'-monophosphat, Inosin-5'-monophosphat, Guanosin-5'-monophosphat) oder deren pharmazeu tisch annehmbaren Salze, Strombine, Theogalline, Pyridinbetainverbindungen, Glutaminsäureglykoside, Apfelsäureglykoside, Glutathionderivate, Lacticol, Hyd roxyflavone (z.B. Eriodictyol, Homoeriodictyol oder ihr Natriumsalze) Hesperetin, Phloretin, hydroxyflavane, 4-Hydroxychalcone, Verbindungen aus Extrakten ba sierend auf Hydrangea dulcis oder Rubus ssp.; Verbindungen oder Mischungen aus Wheyprotein mit Lecithinen, aus Hefextrakten, aus pflanzlichen Hydrolysa ten, aus pulverisiertem Gemüse (z.B Zwiebelpulver, Tomatenpulver), aus Pflan zenextrakten (z.B. aus Liebstöckchen oder aus Pilzen wie Shootake), aus Meeresalgen und Mineralsalzmischungen, insbesondere aus Mineralsalzgemischen
- Geschmacksverbindungen, die eine, mehrere oder alle Geschmackseindrücke von umami, kokumi und salzig bereitstellen oder verstärken, insbesondere (2E, 6Z)-N-cyclopropylnona-2,6-dienamid (FEMA 4087; Flavis 16.093), (2E,6Z)-N-ethyl nona-2,6-dienamid (FEMA 4113; Flavis 16.094) und N-[(2E)-3,7-dimethylocta-2,6-dienyl]cyclopropylcarboxamid (FEMA 4267; Flavis 16.095), die chemische Struk tur wie beschrieben in US2005 0084506, insbesondere N'-[(2-methoxy-4-methylphenyl)methyl]-N-[2-(5-methyl-2-pyridyl)ethyl]oxamid (FEMA 4234; Flavis 16.190), N'-[(2,4-dimethoxyphenyl)methyl]-N-[2-(2-pyridyl)ethyl]oxamid (FEMA 4233; Flavis 16.099), N'-[(2-methoxy-4-methylphenyl)methyl]-N-[2-(2-py ridyl)ethyl]oxamid (FEMA 4231; Flavis 16.101), N-(1-propylbutyl)-1,3-benzodi oxole-5-carboxamid (FEMA 4232; Flavis 16.098), und die chemischen Strukturen wie beschrieben in WO/2011/004016, insbesondere 1-(2-hydroxy-4-isobutoxy phenyl)-3-(2-pyridyl)propane-1-on (FEMA 4722) und 1-(2-hydroxy-4-methoxyphenyl)-3-(2-pyridyl)propane-1-one (FEMA 4723),
- wärmende Mittel, insbesondere Vanillylalkohol-n-butylether, Vanillylalkohol-n-propylether, Vanillylalkoholisopropylether, Vanillylalkoholisobutylether, Vanil lylalkohol n-Aminylether, Vanillylalkoholisoamylether, Vanillylalkohol n-He xylether, Vanillylalkohol Methyläther, Vanillylalkoholethylether, Gingerol, Sho gaol, Paradol, Zingeron, Capsaicin, Dihydrocapsaicin, Nordihydrocapsaicin, Ho mocapsaicin, Homodihydrocapsaicin, Isopropylalkohol, Isoamylalkohol, Benzylal kohol, Eugenol, Zimtöl, Zimtaldehyd,
- scharfe Verbindungen, insbesondere aromatische Isothiocyanate, wie beispiels weise Phenylethylisothiocyanat, Allylisothiocyanat, Cyclopropylisothiocyanat, Butylisothiocyanat, 3-Methylthiopropylisothiocyanat, 4-Hydroxybenzylisothi ocyanat, 4-Methoxybenzylisothiocyanat.

10. Verfahren nach einem der vorhergehenden Ansprüche, wobei die Zusammensetzung bestehend aus der/den zu isolierenden Zielverbindung(en) und einer oder mehrerer weiterer Verbindungen, die in Schritt (i) bereitgestellt wird, ein Volumen von 100 l oder mehr, vorzugsweise 1000 l oder mehr, aufweist.

11. Verfahren nach einem der vorhergehenden Ansprüche, wobei die Mischung, welche in Schritt (iii) durch Mischen des/der Aptamers/Aptamere mit der Zusammensetzung bestehend aus oder umfassend der/den zu isolierenden Zielverbindung(en) und einer oder mehrerer weiterer Verbindungen erhalten wird, ein Volumen von 100 l oder mehr, vorzugsweise von 1000 l oder mehr aufweist.

12. Verfahren nach einem der vorhergehenden Ansprüche, wobei die Zusammensetzung bestehend aus der/den zu isolierenden Zielverbindung(en) und einer oder mehrerer weiterer Verbindung, die in Schritt (i) bereitgestellt wird, ausgewählt ist aus der Gruppe bestehend aus Thaumatococcusextrakten (Thaumatococcus daniellii), Extrakten von Stevia ssp. (insbesondere Stevia rebaudiana), Swingle-Extrakt (Momordica oder Siriria grosvenorii, Luo-Han-Guo), Extrakte aus Glycerrhyzia ssp. (z. B. Glycerrhyzia glabra), Rubus ssp. (z. B. Rubus suavissimus), Zitrus-Extrakte, Extrakte aus Lippia dulcis, Extrakte aus Blättern, Früchten, Ästen, Wurzeln, Schalen, Gruben oder Samen z.B aus Camellia sinensis, Camellia japonica, Coffea ssp., Kakao theobroma, Vitis vinifera, Citrus Ssp. und Hybriden, Poncirus ssp. und Hybriden, Perilla, Humulus, Lupulus oder verwandte Arten.

13. Verfahren nach einem der vorhergehenden Ansprüche, wobei das Verfahren umfasst (iv) Entfernen einer, mehrerer oder aller weiteren Verbindungen der Zusammensetzung, welche nicht spezifisch an das/die Aptamer(e) gebunden sind und/oder Entfernen von (anderen) Verunreinigungen durch einen oder mehrerer Waschschritte, vorzugsweise unter Verwendung eines Waschpuffers.

14. Verfahren nach einem der vorhergehenden Ansprüche, wobei Schritt (v) das Zerstören der dreidimensionalen Struktur, oder jeweils das korrekte Falten des/der Aptamers/Aptamere umfasst, so dass die spezifisch gebundene(n) Zielverbindung(en) von dem/den Aptamer(en) freigelassen wird/werden.

15. Verfahren nach einem der vorhergehenden Ansprüche, wobei die Gesamtmenge der isolierten Zielverbinung(en) oder jeweils die Gesamtmenge der in Schritt (v) freigesetzten Zielverbindung(en) 50 wt% oder mehr, bevorzugt 60 wt% oder mehr, mehr bevorzugt 70 wt% oder mehr, insbesondere 80 oder sogar 90 wt% oder mehr beträgt, basierend auf der Gesamtmenge der Zielverbindung(en) in der In Schritt (i) bereitgestellten Zusammensetzung.

## Revendications

1. Procédé d'isolement, préférentiellement à l'échelle préparative, d'un ou de plusieurs composés cibles, où le ou, respectivement, un, plusieurs ou tous les composés cibles sont choisis dans le groupe constitué par les arômes et les parfums, en particulier les composés présentant une, plusieurs ou toutes les impressions gustatives sucrée, umami, réchauffante et piquante, et les composés présentant une impression gustative amère et/ou astringente, et les composés présentant des propriétés modificatrices d'arôme et/ou de parfum, comprenant les étapes suivantes :
(i) obtention d'une composition constituée du ou des composés cibles à isoler et d'un ou de plusieurs composés supplémentaires,
(ii) obtention d'un ou de plusieurs aptamères présentant une capacité de liaison spécifique vis-à-vis du composé cible à isoler ou, respectivement, vis-à-vis d'un, de plusieurs ou de tous les composés cibles à isoler,
où le ou les aptamères sont immobilisés, préférentiellement immobilisés de façon covalente, sur un support, le support étant préférentiellement choisi dans le groupe constitué des particules magnétiques, des polymères organiques, des polymères inorganiques, des biopolymères, des absorbants de membrane et des matériaux monolithiques,
(iii) mélangeage du ou des aptamères avec la composition constituée du ou des composés cibles à isoler et d'un ou de plusieurs composés supplémentaires, et spécifiquement liaison du ou des composés à isoler à l'aptamère ou aux apta mères,
(iv) éventuellement élimination d'un, de plusieurs ou de tous les composés de la composition qui ne sont pas spécifiquement liés à l'aptamère ou aux aptamères et/ou élimination des (autres) impuretés, et
(v) libération du ou des composés cibles liés d'avec le ou les aptamères.

2. Procédé selon la revendication 1, où l'étape (iii) comprend l'incubation du mélange résultant, qui est obtenu par mélangeage du ou des aptamères avec la composition constituée du ou des composés cibles à isoler et d'un ou de plusieurs composés supplémentaires, dans des conditions permettant au composé cible ou aux composés cibles de se lier spécifiquement à l'aptamère ou aux aptamères.

3. Procédé selon la revendication 2, où les conditions de l'étape (iii) sont telles qu'un repliement correct de l'aptamère ou des aptamères est obtenu ou, respectivement, conservé.

4. Procédé selon l'une quelconque des revendications précédentes, comprenant de plus l'étape suivante :
(vi) isolement du ou des composés cibles libérés à l'étape (v).

5. Procédé selon l'une quelconque des revendications précédentes, comprenant de plus l'étape suivante :
(vii) régénération du ou des aptamères immobilisés, de sorte que le ou les aptamères puissent être réutilisés dans un procédé d'isolement ultérieur.

6. Procédé selon l'une quelconque des revendications précédentes, où l'étape (v) comprend
- le réglage de la température du mélange résultant de l'étape (iv) de sorte que le ou les composés cibles spécifiquement liés soient libérés du ou des aptamères,
et/ou
- l'ajustement du pH du mélange résultant de l'étape (iv) de sorte que le ou les composés cibles spécifiquement liés soient libérés du ou des aptamères,
et/ou
- l'utilisation d'une ou de plusieurs substances chimiques, préférentiellement l'EDTA, pour libérer le ou les composés cibles liés du ou des aptamères, préféren tiellement où l'étape (v) comprend
- l'ajustement du pH du mélange résultant de l'étape (iv) de sorte que le ou les composés cibles spécifiquement liés soient libérés du ou des aptamères,
et/ou
- l'utilisation d'une ou de plusieurs substances chimiques, préférentiellement l'EDTA, pour libérer le ou les composés cibles liés du ou des aptamères.

7. Procédé selon l'une quelconque des revendications précédentes, où l'étape (v) comprend
- le réglage de la température et l'ajustement du pH du mélange résultant de l'étape (iv) de sorte que le ou les composés cibles spécifiquement liés soient libé rés du ou des aptamères.

8. Procédé selon l'une quelconque des revendications précédentes, où le support sur lequel le ou les aptamères sont immobilisés, est choisi dans le groupe constitué par les suivants :
polymères organiques, préférentiellement choisis dans le groupe constitué par les suivants : polystyrènes, méthacrylates et acrylamides,
polymères inorganiques, préférentiellement choisis dans le groupe constitué par les suivants : silice et verre, biopolymères, préférentiellement choisis dans le groupe constitué par dextrane, sépharose et cellu-lose,
adsorbants de membrane, préférentiellement adsorbants de membrane comprenant ou constitués d'une ou de plusieurs substances choisies dans le groupe constitué par les suivantes : cellulose, polyéthersulfone et nylon, et
matériaux monolithiques, préférentiellement matériaux monolithiques comprenant ou constitués d'un ou de plusieurs matériaux choisis dans le groupe constitué par les suivants : polyméthacrylates, polystyrènes, polyacrylamides et silices.

9. Procédé selon l'une quelconque des revendications précédentes, où le ou, respectivement, un, plusieurs ou tous les composés cibles sont choisis dans le groupe constitué par les suivants :
- arômes, en particulier acétophénone, capronate d'allyle, alpha-ionone, bêta-ionone, anisaldéhyde, acétate d'anisyle, formiate d'anisyle, benzaldéhyde, benzothiazole, acétate de benzyle, alcool benzylique, benzoate de benzyle, butyrate de butyle, capronate de butyle, butylidènephtalide, carvone, camphène, caryophyllène, cinéole, acétate de cinnamyle, citrale, citronellol, citronellal, acétate de citronellyle, acétate de cyclo-hexyle, cymène, damascone, décalactone, dihydrocumarine, anthranilate de diméthyle, dodécalactone, acétate d'éthoxyéthyle, acide éthylbutyrique, butyrate d'éthyle, caprinate d'éthyle, capronate d'éthyle, crotonate d'éthyle, éthylfuranéol, éthylguaïacol, isobutyrate d'éthyle, isovalérate d'éthyle, lactate d'éthyle, butyrate d'éthylméthyle, propionate d'éthyle, eucalyptol, eugénol, heptylate d'éthyle, 4-(p-hydroxyphényl)-2-butanone, gamma-décalactone, géraniol, acétate de géranyle, aldéhyde de pamplemousse, dihydrojasmonate de méthyle (par exemple Hedion(R)), héliotropine, 2-heptanone, 3-heptanone, 4-heptanone, trans-2-hepténal, cis-4-hepténal, trans-2-hexénal, cis-3-hexénol, acide trans-2-hexénoïque, acide trans-3-hexénoïque, acétate de cis-2-hexényle, acétate de cis-3-hexényle, capronate de cis-3-hexényle, capronate de trans-2-hexényle, formiate de cis-3-hexényle, acétate de cis-2-hexyle, acétate de cis-3-hexyle, acétate de trans-2-hexyle, formiate de cis-3-hexyle, parahydroxybenzylacétone, isoamylol, isovalérate d'isoamyle, butyrate d'isobutyle, isobutyraldéhyde, éther méthylique d'isoeugénol, isopropylméthylthiazole, acide laurique, acide lévulinique, linalool, linalool oxyde, acétate de linalyle, menthol, menthofurane, anthranilate de méthyle, méthylbutanol, acide méthylbutyrique, acétate de 2-méthylbutyle, capronate de méthyle, cinnamate de méthyle, 5-méthylfurfural, 3,2,2-méthylcyclopenténolone, 6,5,2-méthylhepténone, dihydrojasmonate de méthyle, jasmonate de méthyle, butyrate de 2-méthylméthyle, acide 2-méthyl-2-penténoïque, thiobutyrate de méthyle, 3,1-méthylthiohexanol, acétate de 3-méthylthiohexyle, nérol, acétate de néryle, trans,trans-2,4-nonadiénal, 2,4-nonadiénol, 2,6-nonadiénol, nootkatone, delta-octalactone, gamma-octalactone, 2-octanol, 3-octanol, 1,3-octénol, acétate de 1-octyle, acétate de 3-octyle, acide palmitique, paraldéhyde, phellandrène, pentanedione, acétate de phényléthyle, phényléthanol, phényléthanol, isovalérate de phényléthyle, pipéronal, propionaldéhyde, butyrate de propyle, pulégone, pulégol, sinensal, 1, sulfurol, terpinène, terpinéol, terpinolène, 8,3-thiomenthanone, 4,4,2-thiométhylpentanone, thymol, delta-undécalactone, gamma-undécalactone, valencène, acide valérique, vanilline, acétoïne, éthylvanilline, isobutyrate d'éthylvanilline (= 3-éthoxy-4-isobutyryloxybenzaldéhyde), 2,5-diméthyl-4-hydroxy-3(2H)-furanone et ses dérivés (préférentiellement homofuranéol (= 2-éthyl-4-hydroxy-5-méthyl-3(2H)-furanone), homofuronol (= 2-éthyl-5-méthyl-4-hydroxy-3(2H)-furanone et 5-éthyl-2-méthyl-4-hydroxy-3(2H)-furanone), maltol et dérivés de maltol (préférentiellement éthylmaltol), cumarine, gamma-lactones (préférentiellement gamma-undécalactone, gamma-nonalactone, gamma-décalactone), delta-lactones (préférentiellement 4-méthyldeltadecalactone, massoïalactone, deltadécalactone, tubérolactone), sorbate de méthyle, divanilline, 4-hydroxy-2(ou 5)-éthyl-5(ou 2)-méthyl-3(2H)furanone, 2-hydroxy-3-méthyl-2-cyclopentenone, 3-hydroxy-4,5-diméthyl-2(5H)-furanone, acétate d'amyle, butyrate d'éthyle, n-butyrate d'éthyle, butyrate d'isoamyle, butyrate de 3-méthyléthyle, n-hexanoate d'éthyle, n-hexanoate d'allyle, n-butyrate de n-hexyle, ester éthylique d'acide n-octanoïque, glycidate d'éthyl-3-méthyl-3-phényle, 2-trans-4-cis-décadiènoate d'éthyle, 4-(p-hydroxyphényl)-2-butanone, 1,1-diméthoxy-2,2,5-triméthyl-4-hexane, 2,6-diméthyl-5-heptène-1-al, phénylacétaldéhyde, 2-méthyl-3-(méthylthio)furane, 2-méthyl-3-furanéthiol, disulfure de bis(2-méthyl-3-furyle), furfurylmercaptan, méthional, 2-acétyl-2-thiazoline, 3-mercapto-2-pentanone, 2,5-diméthyl-3-furanéthiol, 2,4,5-triméthylthiazol, 2-acétylthiazol, 2,4-diméthyl-5-éthylthiazol, 2-acétyl-1-pyrroline, 2-méthyl-3-éthylpyrazine, 2-éthyl-3,5-diméthylpyrazine, 2-éthyl-3,6-diméthylpyrazine, 2,3-diéthyl-5-méthylpyrazine, 3-isopropyl-2-méthoxypyra-zine, 3-isobutyl-2-méthoxypyrazine, 2-acétylpyrazine, 2-pentylpyridine, (E,E)-2,4-décadiénal, (E,E)-2,4-nonadiénal, (E)-2-octénal, (E)-2-nonénal, 2-undécénal, 12- méthyltridécanal, 1-pentén-3-one, 4-hydroxy-2,5-diméthyl-3(2H)-furanone, guïacol, 3-hydroxy-4,5-diméthyl-2(5H)-furanone, 3-hydroxy-4-méthyl-5-éthyl-2(5H)-furanone, cinnamaldéhyde, alcool cinnamylique, salicylate de méthyle, isopulégol ainsi que tous les stéréoisomères, énantiomères, isomères de position, diastéréoisomères, isomères cis/trans ou épimères de ces substances, respectivement,
- composés présentant une, plusieurs ou toutes les impressions gustatives sucrée, umami, réchauffante et piquante et modulateurs/modificateurs de goût, en particulier les composés à goût sucré naturels (en particulier ceux qui sont contenus dans les extraits de plantes), par exemple hydrates de carbone à goût sucré (par exemple saccharose, tréhalose, lactose, maltose, mélicitose, mélibiose, raffinose, palatinose, lactulose, D-fructose, D-glucose, D-galactose, L-rhamnose, D-sorbose, D-mannose, D-tagatose, D-arabinose, L-arabinose, D-ribose, D-glycéraldéhyde, maltodextrines), alcools sucrés (par exemple érythritol, thréitol, arabitol, ribitol, xylitol, sorbitol, mannitol, maltitol, isomaltitol, dulcitol, lactitol), protéines (par exemple miraculine, pentaïdine, mo-nélline, thaumatine, curculine, brazzéine, mabinline), acides D-aminés (par exemple D-phénylalanine, D-tryptophane) ou acides aminés et/ou protéines, qui sont contenus dans les extraits d'origine naturelle ou leurs fractions, néohespéridine dihydrochalcone, naringine dihydrochalcone, stéviolgylcosides, stéviosides, stévi- olbioside, rébaudiosides, rébaudioside A, rébaudioside B, rébaudioside C, rébaudioside D, rébaudioside E, rébaudioside F, rébaudioside G, rébaudioside H, dulcosides, rubusoside, suavioside A, suavioside B, suavioside G, suavioside H, suavioside I, suavioside J, baiyunoside 1, baiyunoside 2, phlomisoside 1, phlomisoside 2, phlomisoside 3, ainsi que phlomisoside 4, abrusoside A, abrusoside B, abrusoside C, abrusoside D, cyclocaryoside A et cyclocaryoside I, oslandine, polypodoside A, strogine 1, strogine, 2 strogine 4, selliguéanine A, dihydroquercétine-3-acetate, périllartine, télosmoside A15, périandrine I-V, ptérocaryoside, cyclocaryoside, mukurozioside, trans-anéthol, trans-cinnamaldéhyde, bryoside, bryonoside, bryonodulcoside, carnosifloside, scandénoside, gypénoside, trilobatine, phloridzine, dihydroflavanoles, hématoxyline, cyanine, acide chlorogénique, albiziasaponine, télosmoside, gaudichaudioside, mogrosides, mogroside V, hernandulcine, monatine, acide glycyrrhétinique et ses dérivés, en particulier glycyrrhétine (essentiellement sous forme de sels d'ammonium) et phyllodulcine, où dans le cas d'agents sucrants naturels, particulièrement également ceux qui sont contenus dans les extraits ou les fractions enrichies de ces extraits, sont préférés, particulièrement dans les extraits de thaumatococcus (thaumatococcus daniellii), les extraits de stevia ssp. (en particulier stevia rebaudiana), extrait de siraitia (momordica ou siraitia grosvenorii, Luo-Han-Guo), extraits de glycerrhyzia ssp. (en particulier glycerrhyzia glabra), rubus ssp. (en particulier rubus suavissimus), extraits d'agrumes, extraits de lippia dulcis, néohespéridine dihydrochalcone, naringine dihydrochalcone, stéviosides, stéviolbioside, rébaudiosides, rébaudioside A, rébaudioside B, rébaudioside C, rébaudioside D, rébaudioside E, rébaudioside F, rébaudioside G, rébaudioside H, dulcosides et rubusoside, suavioside A, suavioside B, suavioside G, suavioside H, suavioside I, suavioside J, baiyunoside 1, baiyunoside 2, phlomisoside 1, phlomisoside 2, phlomisoside 3, ainsi que phlomisoside 4, abrusoside A, abrusoside B, abrusoside C, abrusoside D, cyclocaryoside A et cyclocaryoside I, oslandine, polypodoside A, strogine 1, strogine, 2 strogine 4, selliguéanine A, dihydroquercétine-3-acétate, périllartine, télosmoside A15, périandrine I-V, ptérocaryoside, cyclocaryoside, mukurozioside, trans-anéthol, trans-cinnamaldéhyde, bryoside, bryonoside, bryonodulcoside, carnosifloside, scandénoside, gypénoside, trilobatine, phloridzine, dihydroflavanoles, hématoxyline, cyanine, acide chlorogénique, albiziasaponine, télosmoside, gaudichaudioside, mogrosides, mogroside V, hernandulcine, monatine, phyllodulcine, acide glycyrrhétinique et ses dérivés, en particulier ses glycosides tels que glycyrrhétine et les sels physiologiquement acceptables de ces composés, en particulier leurs sels de sodium, de potassium, de calcium ou d'ammonium.
- arômes et parfums d'extraits ou de fractions enrichies des extraits choisis dans le groupe constitué par les suivants : extraits de thaumatococcus (thaumatococcus daniellii), extraits de stevia ssp. (en particulier stevia rebaudiana), extrait de siraitia (momordica ou siraitia grosvenorii, Luo-Han-Guo), extraits de glycerrhyzia ssp. (en particulier glycerrhyzia glabra), rubus ssp. (in particular rubus suavissimus), extraits d'agrumes, extraits de lippia dulcis, extrait de mycétia balansae ;
- modificateur de goût, en particulier glutamate monosodique, acide glutamique libre, nucléotides (par exemple adénosine-5'-monophosphate, cytidine-5'-monophosphate, inosine-5'-monophosphate, guanosine-5'-monophosphate), ou leurs sels pharmaceutiquement acceptables, strombines, théogalline, pyridine bétaïnes, glycosides d'acide glutamique, glycosides d'acide malique, dérivés de glutathione, lactisoles, hydroxyflavanones (par exemple ériodictyol, homoériodictyol ou leurs sels de sodium), hespérétine, phlorétine, hydroxyflavanes, 4-hydroxychalcones, composés d'extraits basés sur hydrangea dulcis ou rubus ssp. ; composés de mélanges de protéine lactosérique avec des lécithines, d'extraits de levure, d'hydrolysats de plantes, de légumes en poudre (par exemple poudre d'oignon, poudre de tomates), d'extraits de plantes (par exemple de livèche ou de champignons tels que shiitake), d'algues marines et mélanges de sels minéraux, en particulier mélanges de sels minéraux,
- arômes pourvoyant ou amplifiant une, plusieurs ou toutes les impressions gustatives umami, kokumi et salée, en particulier (2E, 6Z)-N-cyclopropylnona-2,6-diénamide (FEMA 4087 ; Flavis 16.093), (2E,6Z)-N-éthylnona-2,6-diénamide (FEMA 4113 ; Flavis 16.094) et N-[(2E)-3,7-diméthylocta-2,6-diényl]cyclopropylcarboxamide (FEMA 4267 ; Flavis 16.095), les structures chimiques telles que décrites dans US20050084506, en particulier N'-[(2-méthoxy-4-méthyl-phényl)méthyl]-N-[2-(5-méthyl-2-pyridyl)éthyl]oxamide (FEMA 4234 ; Flavis 16.190), N'-[(2,4-diméthoxyphényl)méthyl]-N-[2-(2-pyridyl)éthyl]oxamide (FEMA 4233 ; Flavis 16.099), N'-[(2-méthoxy-4-méthylphényl)méthyl]-N-[2-(2-pyridyl)éthyl]oxamide (FEMA 4231 ; Flavis 16.101), N-(1-propylbutyl)-1,3-benzodioxole-5-carboxamide (FEMA 4232 ; Flavis 16.098), et les structures chimiques décrites dans WO/2011/004016, en particulier 1-(2-hydroxy-4-isobutoxyphényl)-3-(2-pyridyl)propane-1-one (FEMA 4722) et 1-(2-hydroxy-4-méthoxy-phényl)-3-(2-pyridyl)propane-1-one (FEMA 4723),
- agents réchauffants, en particulier éther n-butylique d'alcool vanillylique, éther n-propylique d'alcool vanillylique, éther isopropylique d'alcool vanillylique, éther isobutylique d'alcool vanillylique, éther n-aminé d'alcool vanillylique, éther isoamylique d'alcool vanillylique, éther n-hexylique d'alcool vanillylique, éther méthylique d'alcool vanillylique, éther éthylique d'alcool vanillylique, gingérol, shogaol, paradol, zingérone, capsaïcine, dihydrocapsaïcine, nordihydrocapsaïcine, homocapsaïcine, homodihydrocapsaïcine, iso-propanol, iso-amylol, alcool benzylique, eugénol, huile essentielle de cannelle, cinnamaldéhyde,
- composés âcres, en particulier isothiocyanates aromatiques, tels que par exemple isothiocyanate de phényléthyle, isothiocyanate d'allyle, isothiocyanate de cyclopropyle, isothiocyanate de butyle, isothiocyanate de 3-méthylthiopropyle, isothiocyanate de 4-hydroxybenzyle, isothiocyanate de 4-méthoxybenzyle.

10. Procédé selon l'une quelconque des revendications précédentes, où la composition constituée du ou des composés cibles à isoler et d'un ou de plusieurs composés supplémentaires obtenus dans l'étape (i) présente un volume de 100 l ou plus, préférentiellement de 1000 l ou plus.

11. Procédé selon l'une quelconque des revendications précédentes, où le mélange, qui est obtenu dans l'étape (iii) par mélangeage du ou des aptamères avec la composition constituée ou comprenant le ou les composés cibles à isoler et un ou plusieurs composés supplémentaires présente un volume de 100 l ou plus, préférentiellement de 1000 l ou plus.

12. Procédé selon l'une quelconque des revendications précédentes, où la composition constituée du ou des composés cibles à isoler et d'un ou de plusieurs composés supplémentaires obtenus dans l'étape (i) est choisie dans le groupe constitué par les extraits de thaumatococcus (thaumatococcus daniellii), les extraits de stevia ssp. (en particulier stevia rebaudiana), l'extrait de siraitia (momordica ou siraitia grosvenorii, Luo-Han-Guo), les extraits de glycerrhyzia ssp. (en particulier glycerrhyzia glabra), rubus ssp. (en particulier rubus suavissimus), les extraits d'agrumes, les extraits de lippia dulcis, les extraits de feuilles, fruit, branches, racines, pelures, plasmodesmes ou graines, par exemple de camellia sinensis, camellia japonica, coffea ssp., cocoa theobroma, vitis vinifera, citrus ssp. et hybrides, poncirus ssp. et hybrides, perilla, humulus, lupulus ou espèces apparentées.

13. Procédé selon l'une quelconque des revendications précédentes, où le procédé comprend
(iv) l'élimination d'un, de plusieurs ou de tous les composés supplémentaires de la composition qui ne sont pas spécifiquement liés à l'aptamère ou aux aptamères et/ou l'élimination d'impuretés ou d'autres impuretés par une ou plusieurs étapes de lavage, préférentiellement en utilisant un tampon de lavage.

14. Procédé selon l'une quelconque des revendications précédentes, où l'étape (v) comprend la destruction de la structure tridimensionnelle ou, respectivement, le repliement correct du ou des aptamères, de sorte que le ou les composés cibles spécifiquement liés sont libérés du ou des aptamères.

15. Procédé selon l'une quelconque des revendications précédentes, où la quantité totale du ou des composés cibles isolés ou, respectivement, la quantité totale du ou des composés cibles libérés dans l'étape (v) est de 50 % en masse ou plus, préférentiellement de 60 % en masse ou plus, plus préférentiellement de 70 % en masse ou plus, en particulier de 80 ou même de 90 % en masse ou plus, par rapport à la quantité totale du ou des composés cibles présents dans la composition obtenue à l'étape (i).


### SEQUENCE LISTING

<110> SYMRISE AG
<120> Method for isolating fragrance and flavour compounds
<130> SA 8369-01EP
<140> Application number: not yet known
   <141> filing date: 11 December 2012
<160> 1
<170> BiSSAP 1.0
<210> 1
   <211> 49
   <212> DNA
   <213> artificial sequences
<220>
   <221> source
   <222> 1..49
   <223> /mol_type="DNA" /note="selected against theophylline" /organism="artificial sequences"
<400> 1
   ctcatctgtg atctaaggcg ataccagccg aaaggccctt ggcagcgtc 49